# EUROPEAN PATENT APPLICATION

(11) **EP 4 847 181 A1**
(43) Date of publication of application: **02.12.2026**
(21) Application number: 25901354.8
(22) Date of filing: 23.01.2025
(51) Int. Cl.: B23K 20/12

(54) **METHOD FOR FORMING REFRIGERANT FLOW PASSAGE, METHOD FOR PRODUCING STRUCTURE THAT HAS REFRIGERANT FLOW PASSAGE, AND MACHINE TOOL**

(30) Priority: 06.12.2024 JP 2024212970
(71) Applicant: Yamazaki Mazak Corporation, Niwa-gun, Aichi 480-0197 (JP)
(72) Inventor: MINATANI, Masayasu, Niwa-gun, Aichi 480-0197 (JP); MATSUBARA, Eiji, Niwa-gun, Aichi 480-0197 (JP); OGAWA, Seita, Niwa-gun, Aichi 480-0197 (JP)
(74) Representative: TBK
(86) International application number: PCT/JP2025/002069
(87) International publication number: WO 2026/120825

(57) **Abstract**

A method of forming a refrigerant flow channel includes: preparing a case and a cover, the case including a recess defined by a side wall and an end wall and a groove formed on an outer surface of the end wall, the cover covering the groove; joining the case and the cover by friction stirring such that a refrigerant flow channel is formed by the groove and the cover; and emitting a coolant into the case from an applicator, while the friction stirring is being performed.

## Description

### Technical Field

The present invention relates to a method of forming a refrigerant flow channel, a method of manufacturing a structure including the refrigerant flow channel, and a machine tool.

### Background Art

A friction stirring welder including cooling means has been known.

Example related techniques include a friction stirring welder disclosed in PTL1. The friction stirring welder disclosed in PTL1 includes cooling means disposed above a base material. The cooling means includes first cooling means ejecting a refrigerant at a front position on a joining line and second cooling means cooling weld beads.

### Citation List

### Patent Literature

PTL1: JP 2004-148350 A.

### Summary of Invention

### Technical Problem

An object of the present invention is to provide a method of forming a refrigerant flow channel, a method of manufacturing a structure including the refrigerant flow channel, and a machine tool suppressing warpage of a case by heat caused by friction stirring. Solution to Problem

Embodiments of the present invention relate to a method of forming a refrigerant flow channel, a method of manufacturing a structure including the refrigerant flow channel, and a machine tool described below.
(1) A method of forming a refrigerant flow channel includes preparing a case and a cover, the case including a recess defined by a side wall and an end wall and a groove formed on an outer surface of the end wall, the cover covering the groove. The case and the cover are joined by friction stirring such that a refrigerant flow channel is formed by the groove and the cover. A coolant is emitted into the case from an applicator, while the friction stirring is being performed.
(2) A method of manufacturing a structure including a refrigerant flow channel includes preparing a case and a cover, the case including a recess defined by a side wall and an end wall and a groove formed on an outer surface of the end wall, the cover covering the groove. The case and the cover are joined by friction stirring such that a refrigerant flow channel is formed by the groove and the cover. A coolant is emitted into the case from an applicator, while the friction stirring is being performed. A cooling target object is disposed in the recess. A lid is fixed to the case, to close the recess with the lid.
(3) A machine tool includes a workpiece supporter, a spindle, a support, a rotational driver, a mover, a supplier, and an applicator. The workpiece supporter is configured to support a case and a cover. The case includes a recess defined by a side wall and an end wall and a groove formed on an outer surface of the end wall. The cover covers the groove. The spindle is capable of holding a friction stirring welding tool configured to join the case and the cover by friction stirring such that a refrigerant flow channel is formed by the groove and the cover. The support is configured to support the spindle to be rotatable about a first axis. The rotational driver is configured to rotate the spindle about the first axis. The mover is configured to move the spindle and the support relative to the workpiece supporter. The supplier is configured to supply a coolant to the applicator. The applicator is configured to emit the coolant into the case, while the friction stirring is being performed.

### Effects of Invention

The present invention can provide a method of forming a refrigerant flow channel, a method of manufacturing a structure including the refrigerant flow channel, and a machine tool suppressing warpage of a case by heat caused by friction stirring.

### Brief Description of Drawings

[FIG. 1] FIG. 1 is a schematic perspective view schematically illustrating an example of a case and a cover prepared by a preparation step.
[FIG. 2] FIG. 2 is a schematic perspective view schematically illustrating an example of the case prepared by the preparation step.
[FIG. 3] FIG. 3 is a schematic perspective view schematically illustrating an example of the case and the cover prepared by the preparation step.
[FIG. 4] FIG. 4 is a schematic cross-sectional view schematically illustrating a state where the cover is disposed to the case.
[FIG. 5] FIG. 5 is an enlarged view of a region surrounded by a one-dot-chain line circle B in FIG. 4.
[FIG. 6] FIG. 6 is a schematic cross-sectional view schematically illustrating how a joining step is executed.
[FIG. 7] FIG. 7 is a schematic perspective view schematically illustrating another example of the case and the cover prepared by the preparation step.
[FIG. 8] FIG. 8 is a schematic perspective view schematically illustrating yet another example of the case and the cover prepared by the preparation step.
[FIG. 9] FIG. 9 is a schematic perspective view schematically illustrating a state where the case and the cover are supported by a workpiece supporter.
[FIG. 10] FIG. 10 is a schematic perspective view schematically illustrating a state where the case and the cover are supported by the workpiece supporter.
[FIG. 11] FIG. 11 is a schematic cross-sectional view schematically illustrating a state where the case and the cover are supported by the workpiece supporter.
[FIG. 12] FIG. 12 is a schematic cross-sectional view schematically illustrating how the joining step is executed.
[FIG. 13] FIG. 13 is a schematic cross-sectional view schematically illustrating how the joining step is executed.
[FIG. 14] FIG. 14 is a schematic cross-sectional view schematically illustrating how the height of a first end of a first post can be adjusted.
[FIG. 15] FIG. 15 is a schematic cross-sectional view schematically illustrating how the height of a second end of a second post can be adjusted.
[FIG. 16] FIG. 16 is a schematic front view schematically illustrating a state where the case and the cover are supported by the workpiece supporter.
[FIG. 17] FIG. 17 is a schematic perspective view schematically illustrating how the joining step is executed.
[FIG. 18] FIG. 18 is a schematic perspective view schematically illustrating how the joining step is executed.
[FIG. 19] FIG. 19 is a schematic perspective view schematically illustrating how the joining step is executed.
[FIG. 20] FIG. 20 is a schematic perspective view schematically illustrating how the joining step is executed.
[FIG. 21] FIG. 21 is a diagram illustrating a first path.
[FIG. 22] FIG. 22 is a schematic cross-sectional view schematically illustrating how the joining step is executed.
[FIG. 23] FIG. 23 is a schematic perspective view schematically illustrating an example of a jig supporting the case and the cover.
[FIG. 24] FIG. 24 is a schematic cross-sectional view schematically illustrating how the joining step is executed.
[FIG. 25] FIG. 25 is a schematic front view schematically illustrating how a cutting step is executed.
[FIG. 26] FIG. 26 is a schematic perspective view schematically illustrating how the cutting step is executed.
[FIG. 27] FIG. 27 is a schematic perspective view schematically illustrating a state where a cooling target object is disposed in a recess of the case.
[FIG. 28] FIG. 28 is a schematic perspective view schematically illustrating how a lid is attached to the case.
[FIG. 29] FIG. 29 is a flowchart illustrating an example of a method of forming a refrigerant flow channel according to embodiment 1.
[FIG. 30] FIG. 30 is a schematic front view schematically illustrating a part of a machine tool according to embodiment 1.
[FIG. 31] FIG. 31 is a schematic perspective view schematically illustrating an example of the jig supporting the case and the cover.
[FIG. 32] FIG. 32 is a diagram illustrating an example of a spray nozzle.
[FIG. 33] FIG. 33 is a schematic perspective view schematically illustrating the machine tool according to embodiment 1.
[FIG. 34] FIG. 34 is a schematic perspective view schematically illustrating the machine tool according to embodiment 1.
[FIG. 35] FIG. 35 is a schematic front view schematically illustrating a part of the machine tool according to embodiment 1.
[FIG. 36] FIG. 36 is a diagram schematically illustrating how a controller can control a plurality of control target devices.

### Description of Embodiments

A method of forming a refrigerant flow channel, a method of manufacturing a structure including the refrigerant flow channel, and a machine tool according to embodiments will now be described with reference to the accompanying drawings. In the description of the embodiments, portions and components having the same functions are denoted by the same reference numerals, and the redundant description on the portions and the components denoted by the same reference numerals will be omitted.

### (Definition of Terms)

In this specification, a direction of pressing a case 7 and a cover 8 by a friction stirring welding tool T1 is defined as a first direction DR1. A direction opposite to the first direction DR1 is defined as a second direction DR2.

The first direction DR1 may be a downward direction (more specifically, a vertically downward direction), or may be a lateral direction (more specifically, a horizontal direction). For example, if a machine tool 1 is a vertical machining center, the first direction DR1 is a downward direction (more specifically, a vertically downward direction). For example, if the machine tool 1 is a horizontal machining center, the first direction DR1 is a lateral direction (more specifically, a horizontal direction).

### (Embodiment 1)

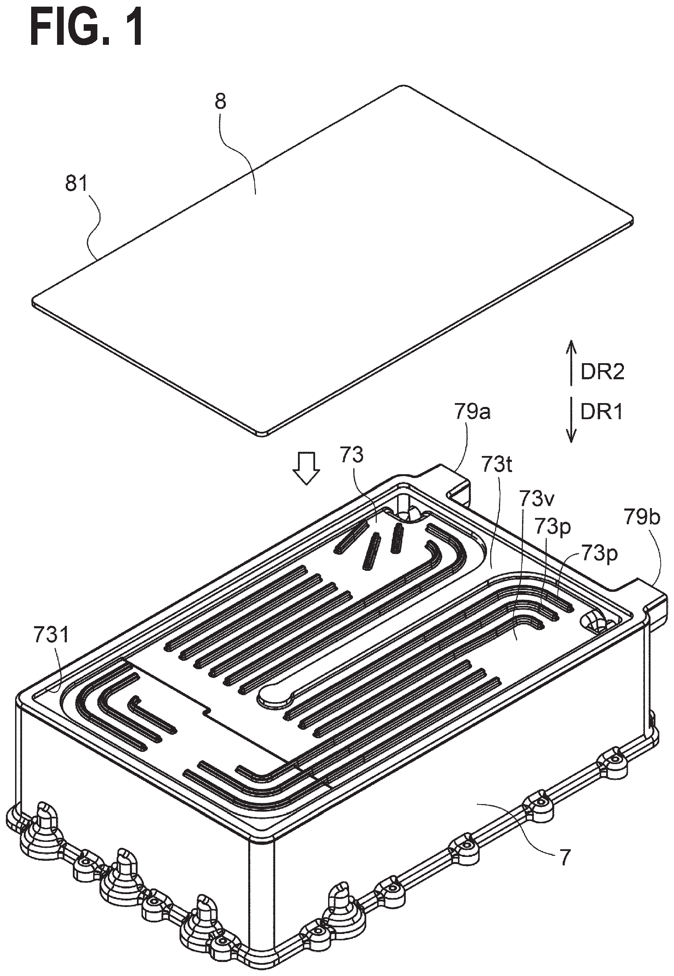

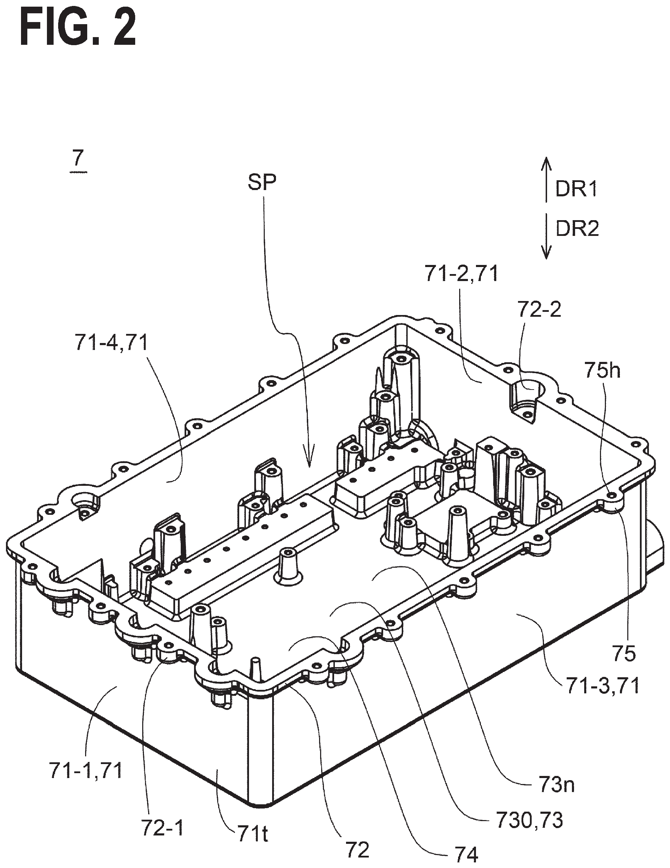

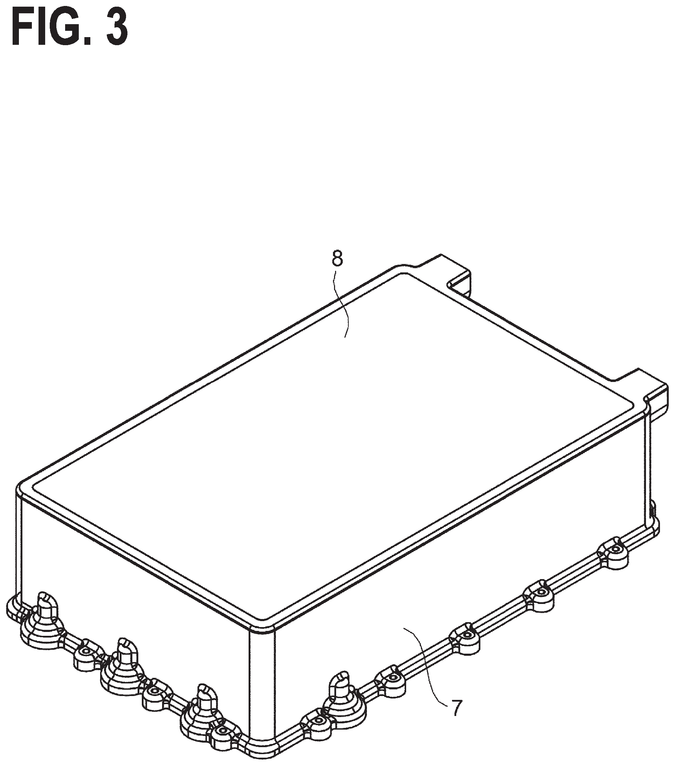

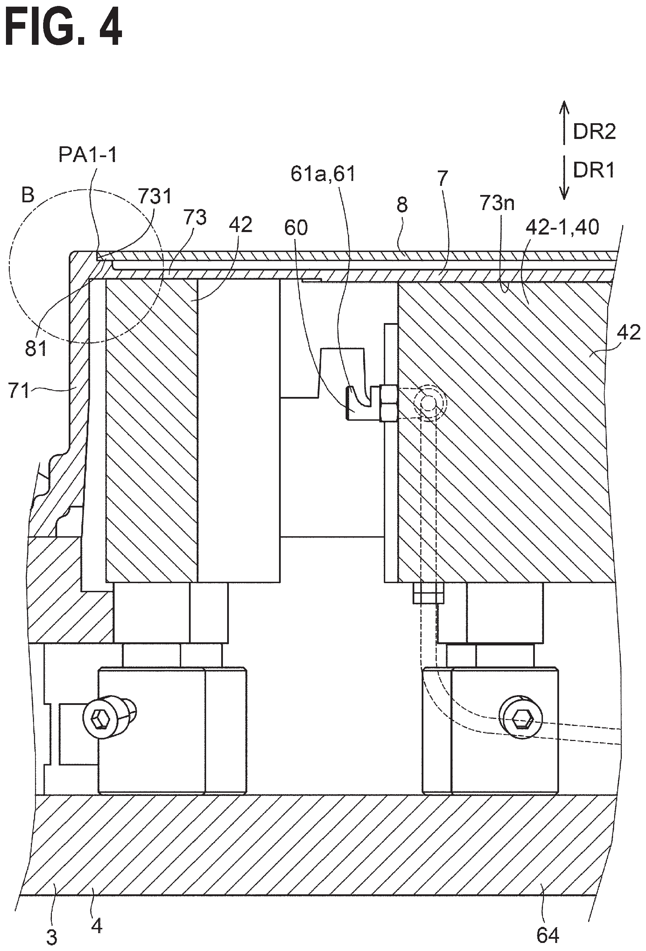

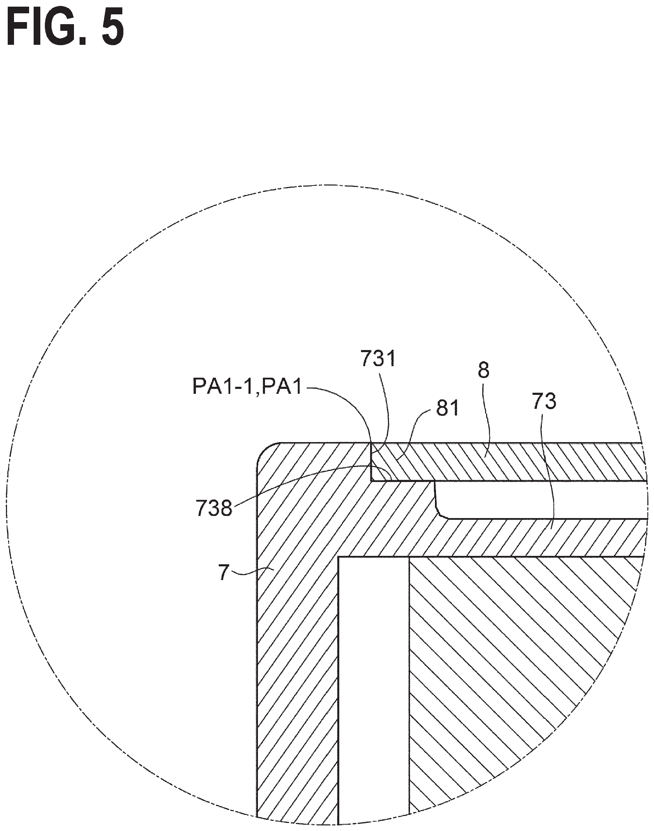

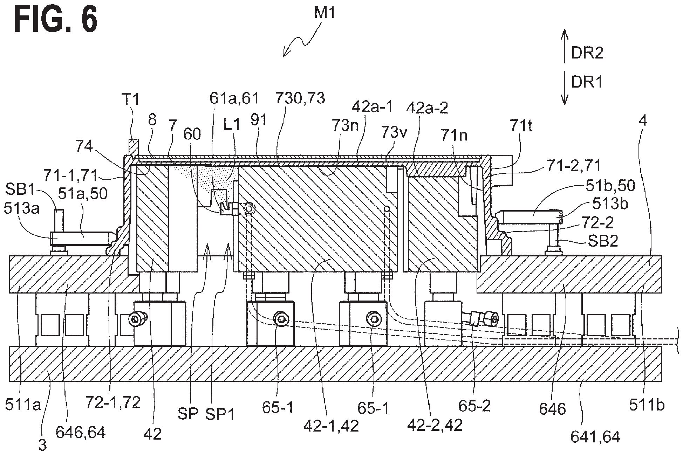

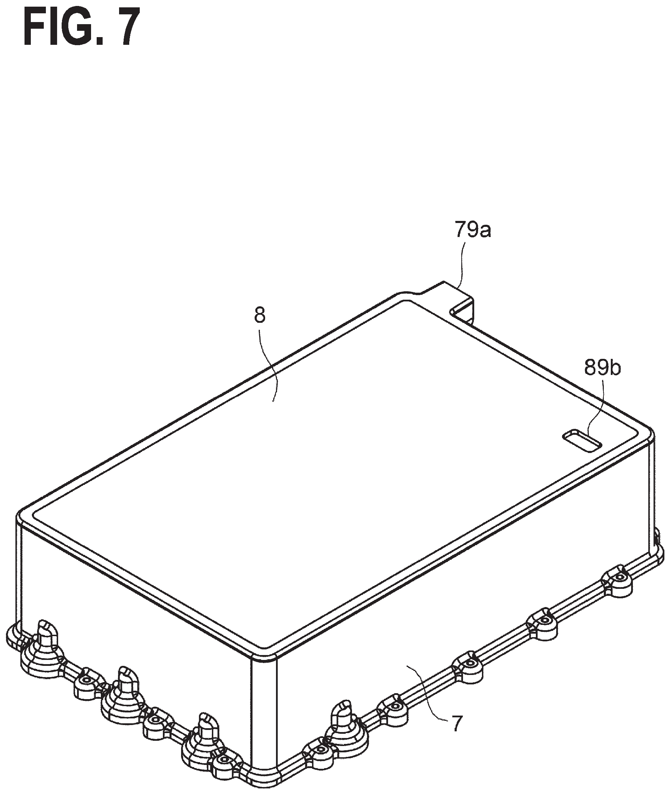

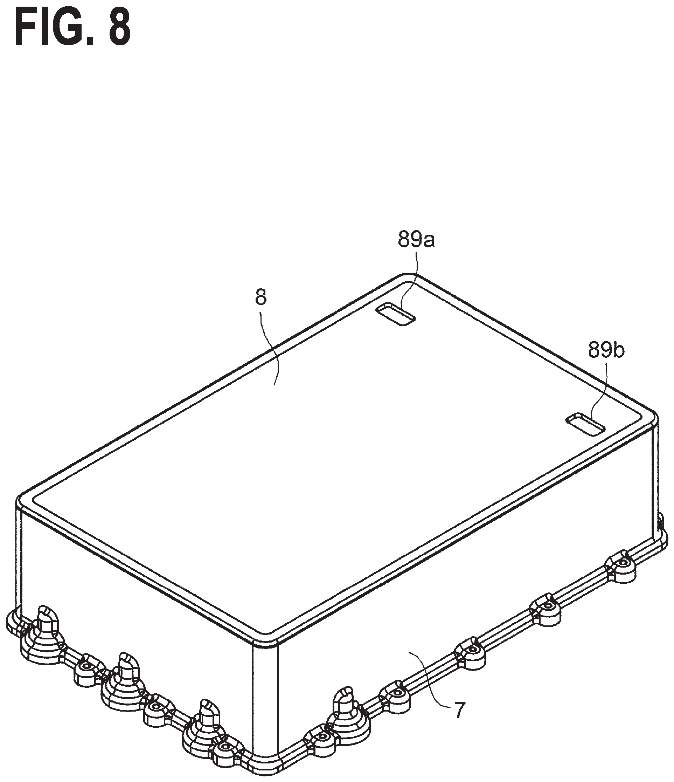

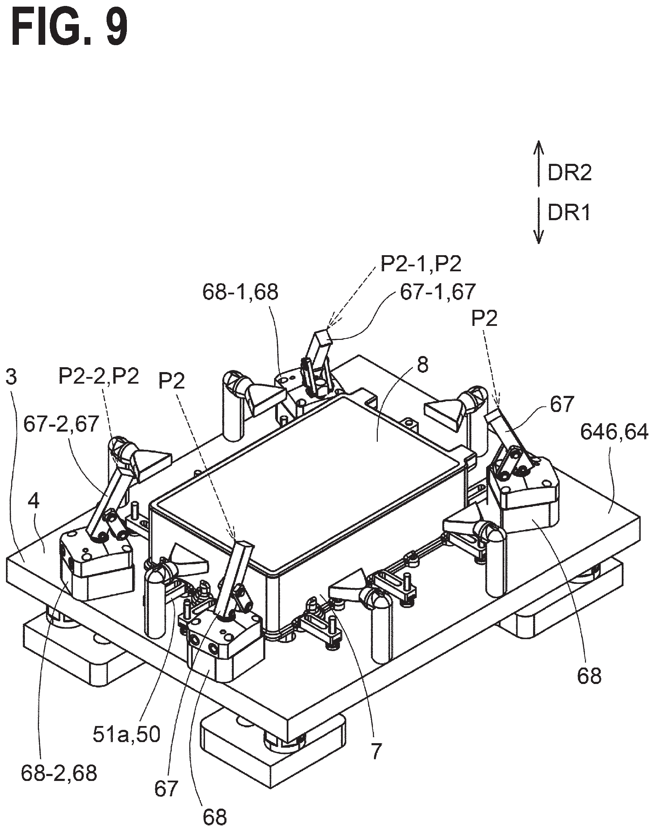

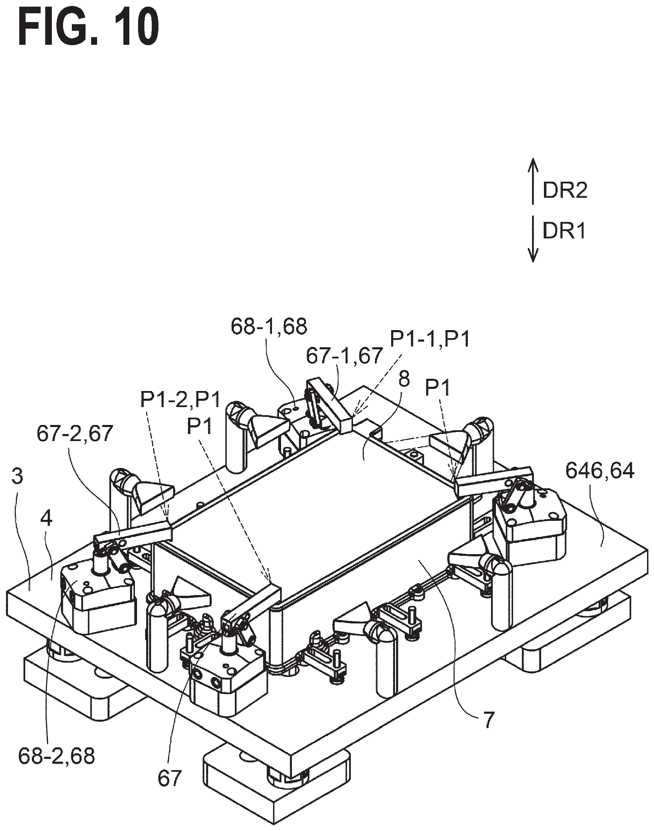

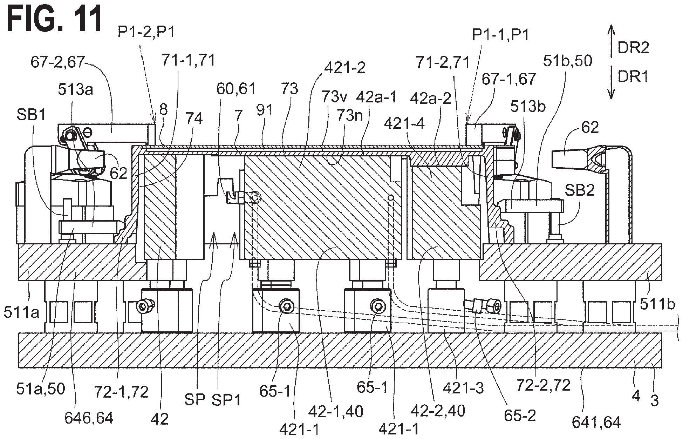

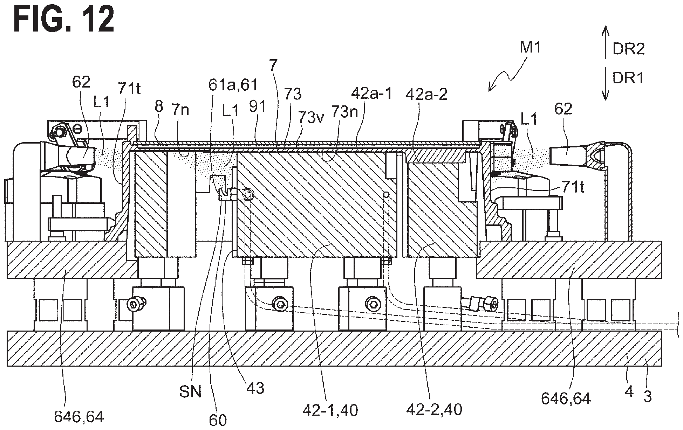

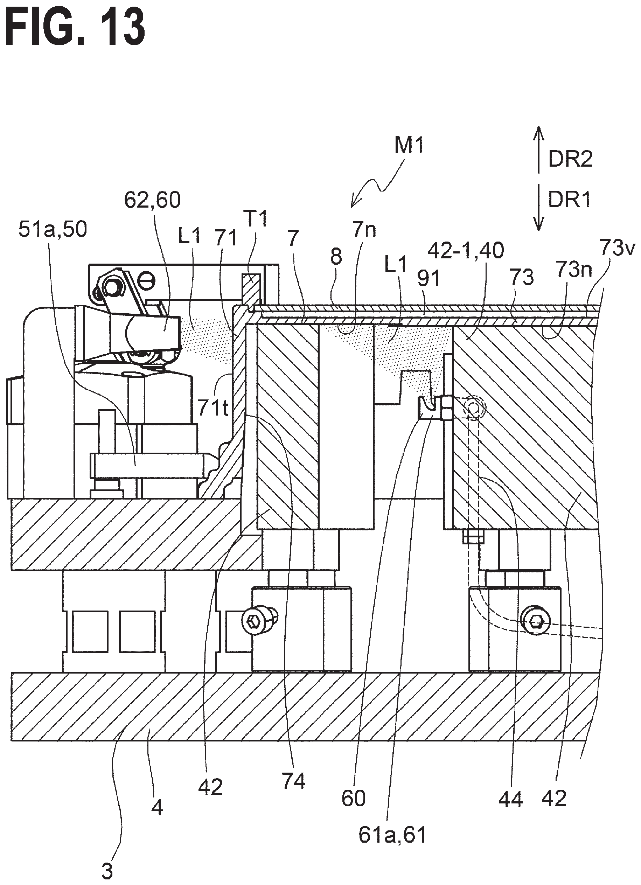

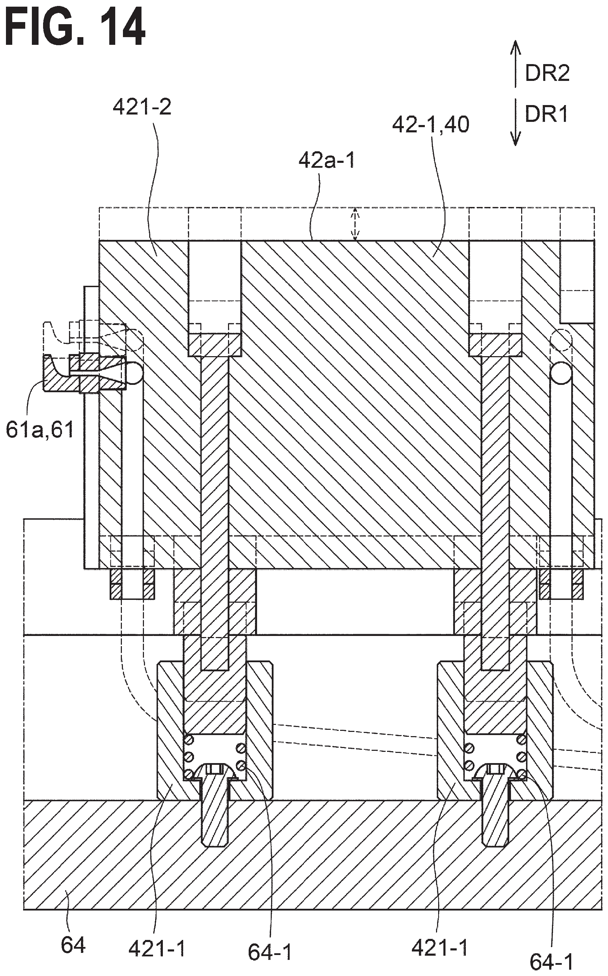

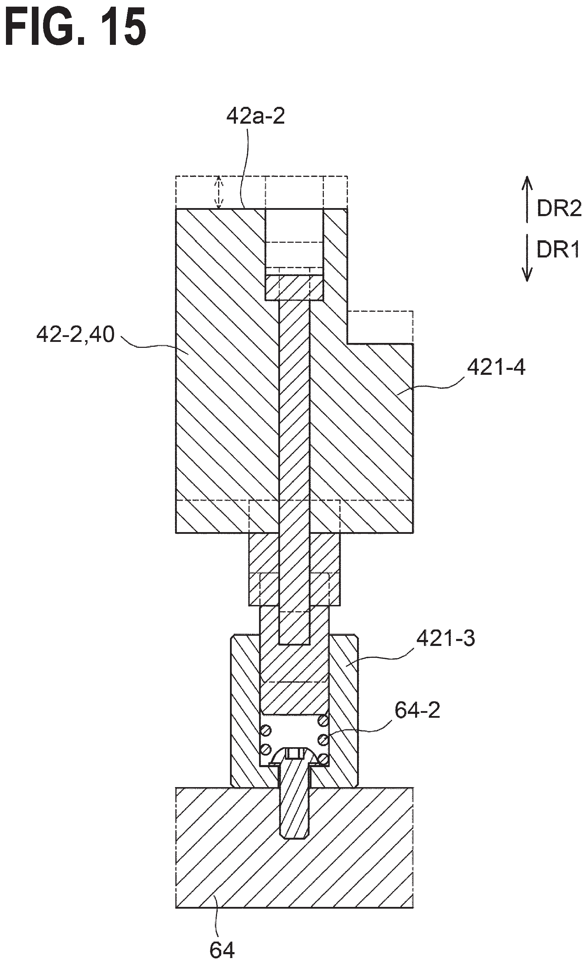

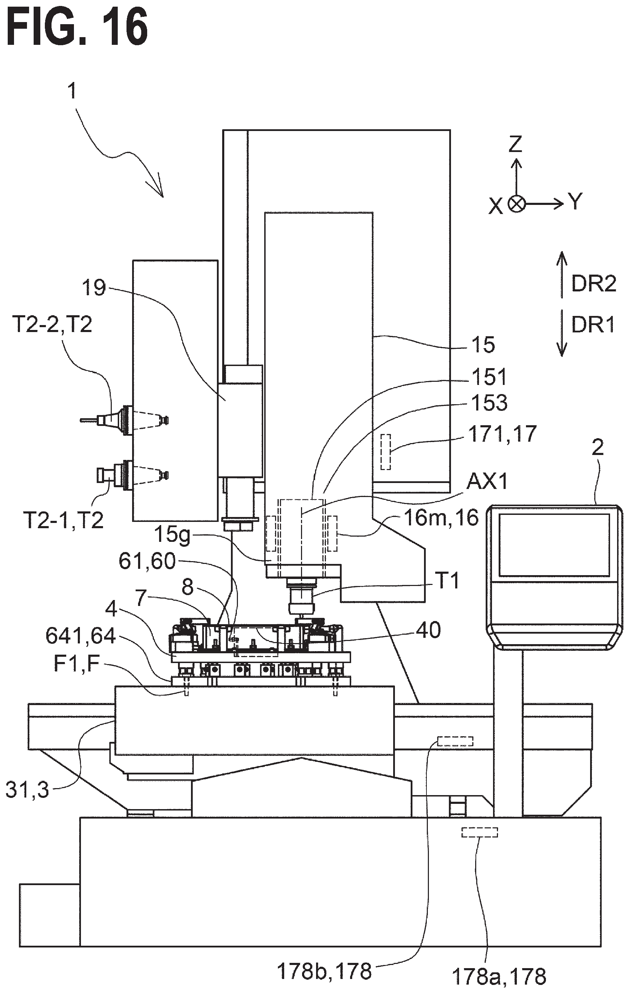

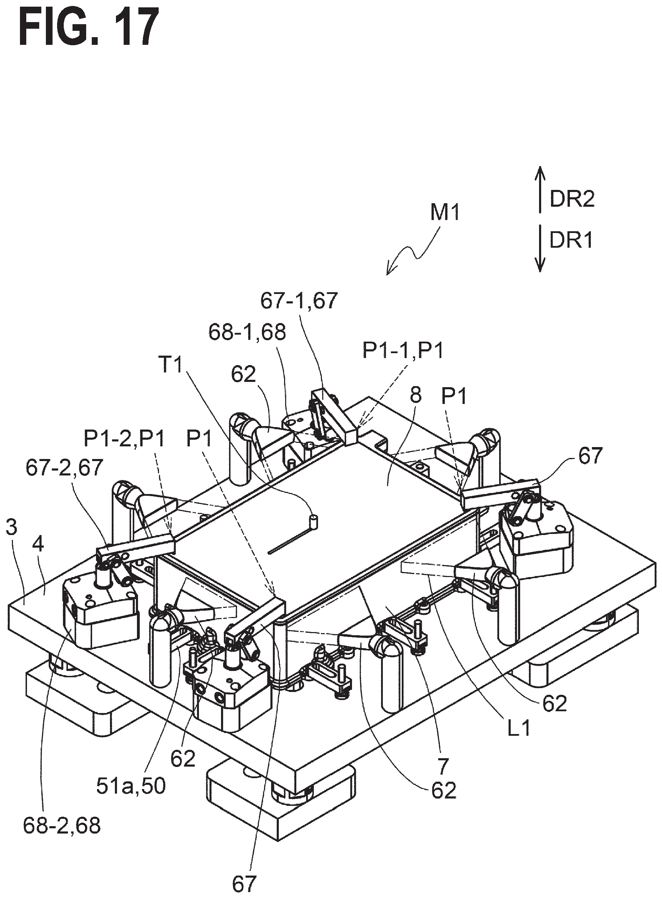

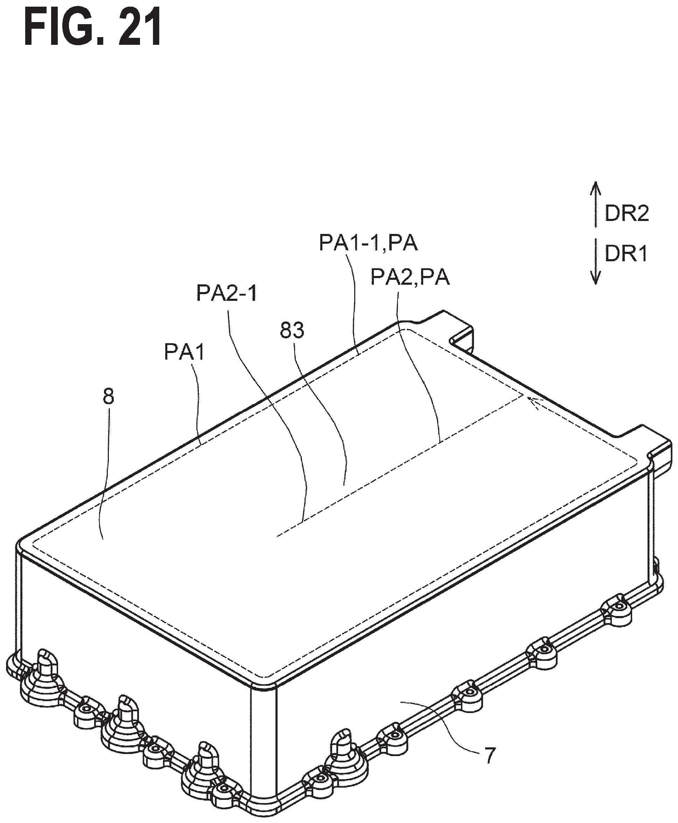

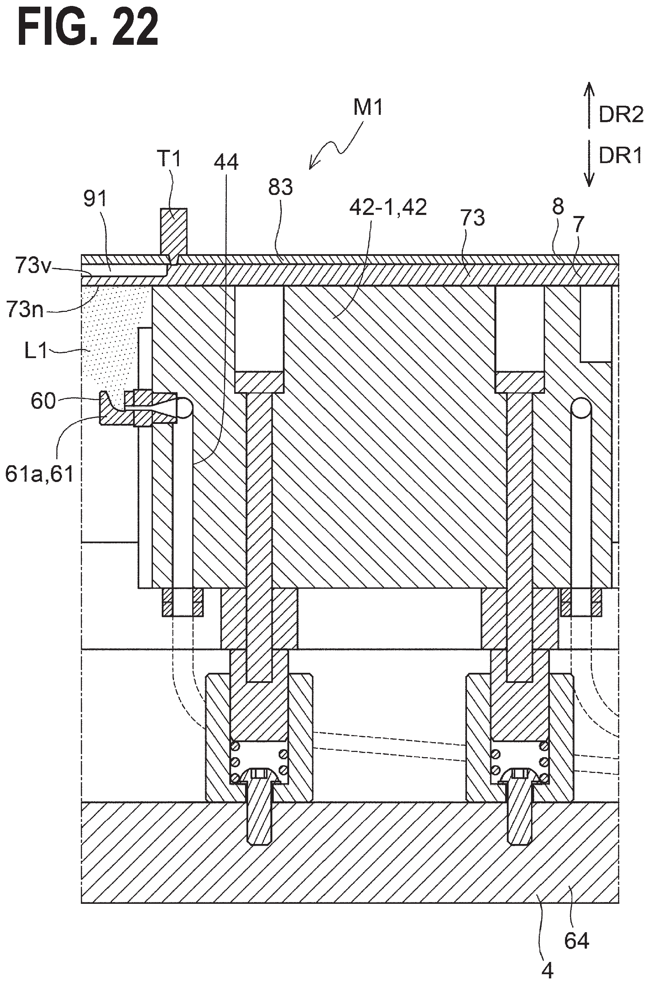

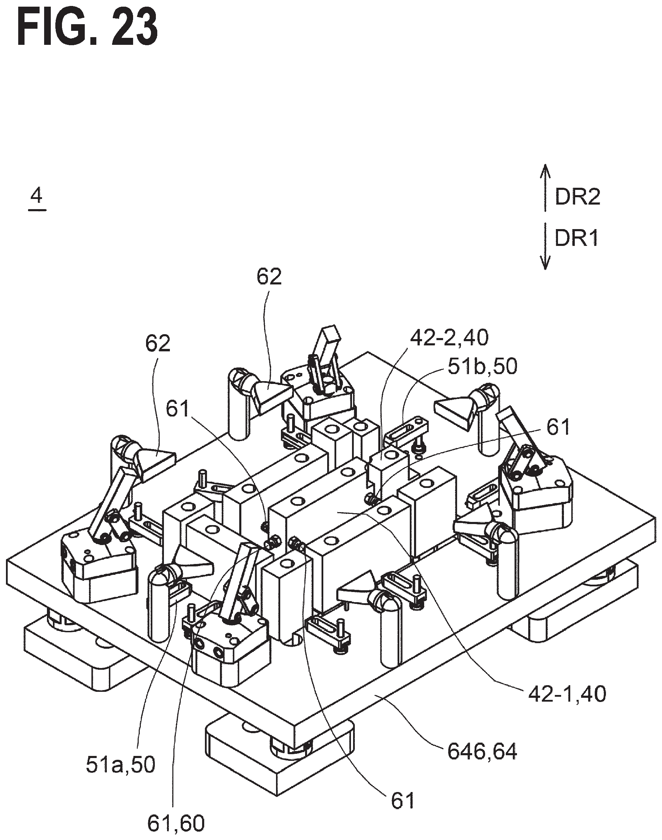

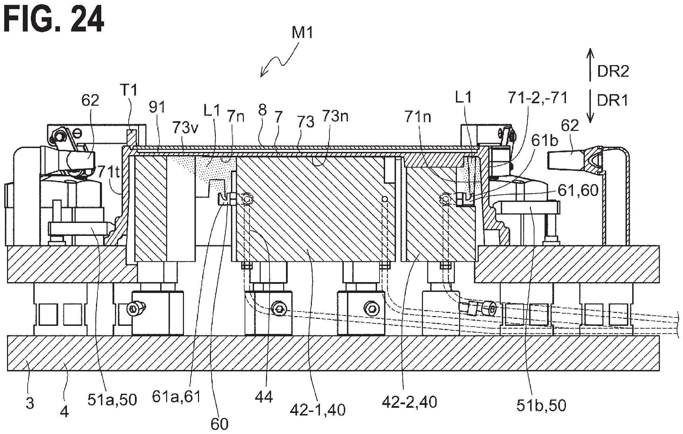

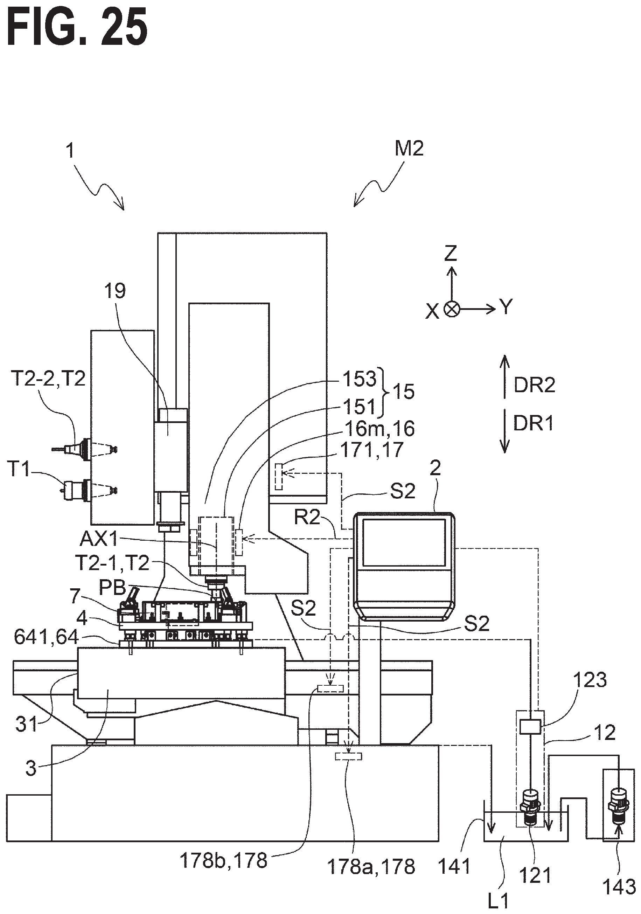

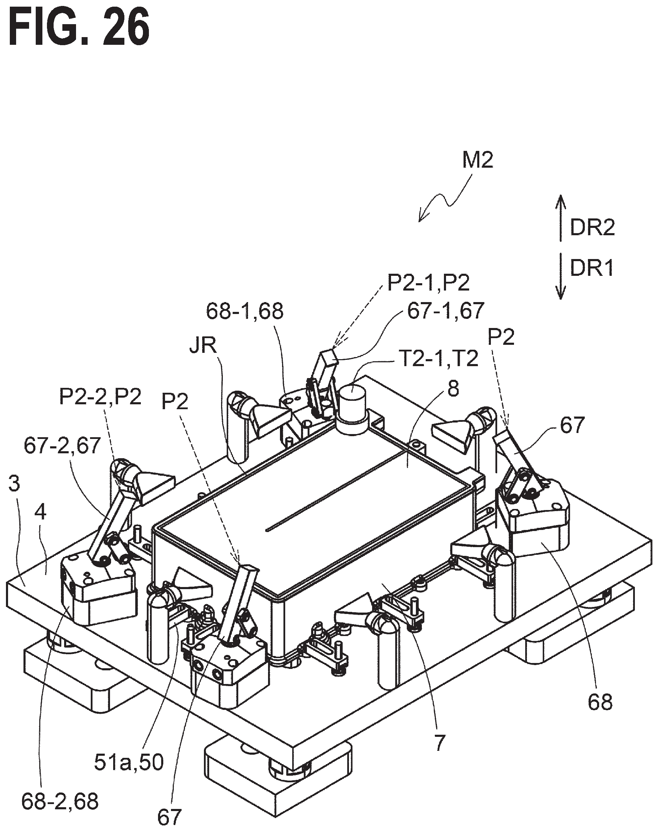

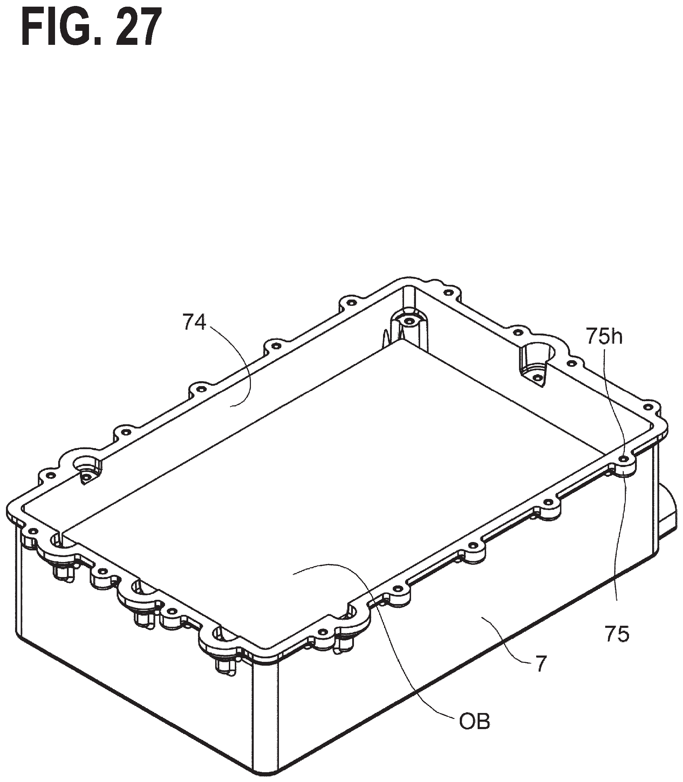

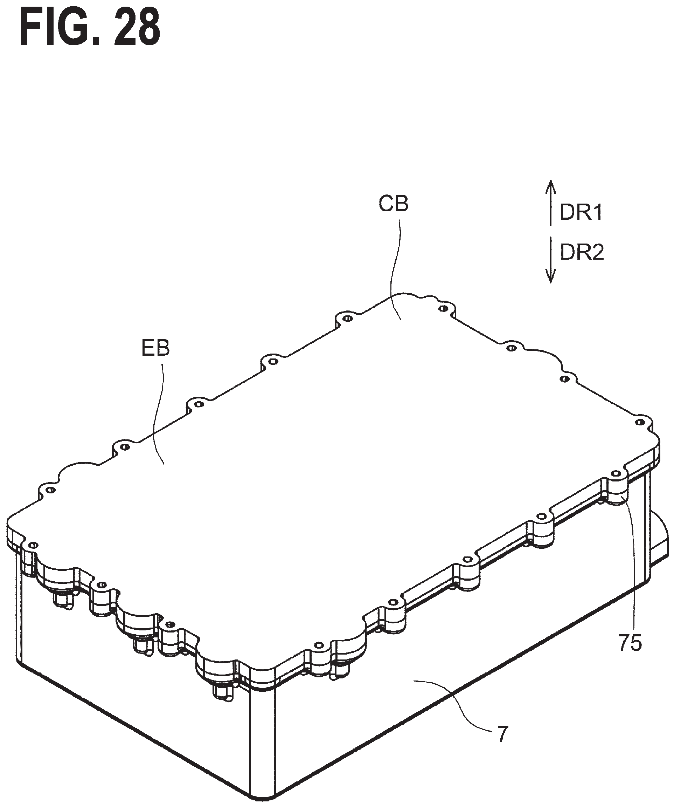

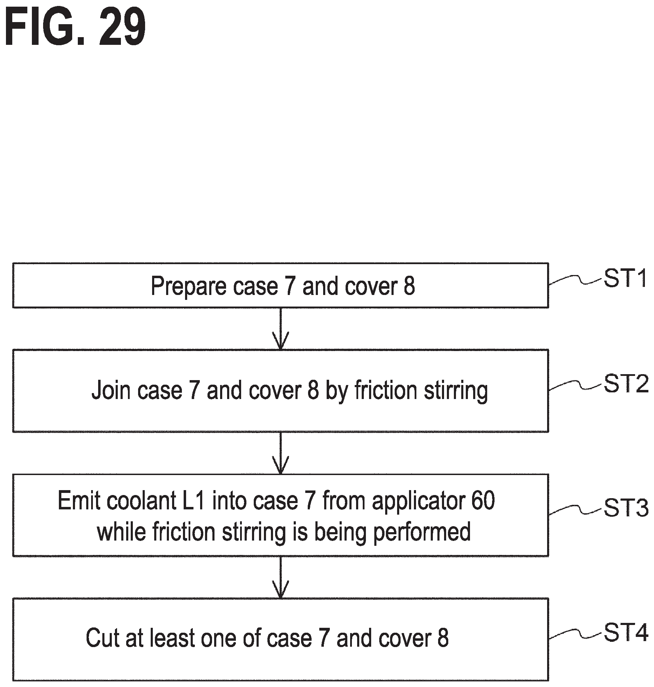

A method of forming a refrigerant flow channel and a method of manufacturing a structure including the refrigerant flow channel according to embodiment 1 will be described with reference to FIGS. 1 to 29. FIG. 1 is a schematic perspective view schematically illustrating an example of the case 7 and the cover 8 prepared by a preparation step. FIG. 2 is a schematic perspective view schematically illustrating an example of the case 7 prepared by the preparation step. FIG. 3 is a schematic perspective view schematically illustrating an example of the case 7 and the cover 8 prepared by the preparation step. FIG. 4 is a schematic cross-sectional view schematically illustrating a state where the cover 8 is disposed to the case 7. FIG. 5 is an enlarged view of a region surrounded by a one-dot-chain line circle B in FIG. 4. FIG. 6 is a schematic cross-sectional view schematically illustrating how a joining step is executed. FIG. 7 is a schematic perspective view schematically illustrating another example of the case 7 and the cover 8 prepared by the preparation step. FIG. 8 is a schematic perspective view schematically illustrating yet another example of the case 7 and the cover 8 prepared by the preparation step. FIGS. 9 and 10 are schematic perspective views schematically illustrating a state where the case 7 and the cover 8 are supported by a workpiece supporter 3. FIG. 11 is a schematic cross-sectional view schematically illustrating a state where the case 7 and the cover 8 are supported by the workpiece supporter 3. FIG. 12 is a schematic cross-sectional view schematically illustrating how the joining step is executed. FIG. 13 is a schematic cross-sectional view schematically illustrating how the joining step is executed. FIG. 14 is a schematic cross-sectional view schematically illustrating how the height of a first end 42a-1 of a first post 42-1 can be adjusted. FIG. 15 is a schematic cross-sectional view schematically illustrating how the height of a second end 42a-2 of a second post 42-2 can be adjusted. FIG. 16 is a schematic front view schematically illustrating a state where the case 7 and the cover 8 are supported by the workpiece supporter 3. FIGS. 17 to 20 are schematic perspective views schematically illustrating how the joining step is executed. FIG. 21 is a diagram illustrating a first path PA. FIG. 22 is a schematic cross-sectional view schematically illustrating how the joining step is executed. FIG. 23 is a schematic perspective view schematically illustrating an example of a jig 4 supporting the case 7 and the cover 8. FIG. 24 is a schematic cross-sectional view schematically illustrating how the joining step is executed. FIG. 25 is a schematic front view schematically illustrating how a cutting step is executed. FIG. 26 is a schematic perspective view schematically illustrating how the cutting step is executed. FIG. 27 is a schematic perspective view schematically illustrating a state where a cooling target object OB is disposed in a recess 74 of the case 7. FIG. 28 is a schematic perspective view schematically illustrating how a lid CB is attached to the case 7. FIG. 29 is a flowchart illustrating an example of a method of forming a refrigerant flow channel according to embodiment 1.

As in the example illustrated in FIG. 1, a method of forming a refrigerant flow channel according to embodiment 1 includes a step of preparing the case 7 and the cover 8 (hereinafter, referred to as "preparation step").

As in the example illustrated in FIG. 2, the case 7 prepared in the preparation step includes the recess 74 defined by side walls 71 and an end wall 73.

As in the example illustrated in FIG. 1, the case 7 prepared in the preparation step may have a groove 73v formed in an outer surface 73t of the end wall 73. In the example illustrated in FIGS. 1 and 2, the groove 73v is disposed on the side opposite to the recess 74, with reference to the end wall 73. More specifically, the groove 73v is formed in the outer surface 73t of the end wall 73, and an inner surface 73n of the end wall 73 defines the bottom surface of the recess 74.

As in the example illustrated in FIGS. 1 and 3, the cover 8 prepared in the preparation step can cover the groove 73v described above.

As in the example illustrated in FIG. 6, the method of forming a refrigerant flow channel according to embodiment 1 includes a step of joining the case 7 and the cover 8 by friction stirring to form a refrigerant flow channel 91 with the groove 73v and the cover 8 (hereinafter, referred to as "joining step").

As in the example illustrated in FIG. 6, the method of forming a refrigerant flow channel according to embodiment 1 includes a step of emitting a coolant L1 into the case 7 from an applicator 60 while the friction stirring is being performed (hereinafter, referred to as "coolant emission step").

In the coolant emission step, while the friction stirring is being performed, the coolant L1 is emitted to at least one of inner surfaces 71n of the side walls 71, the inner surface 73n of the end wall 73, and outer surfaces 71t of the side walls 71.

In embodiment 1, the coolant L1 is emitted into the case 7 while the friction stirring is being performed, whereby warpage of the case 7 due to heat produced by the friction stirring is suppressed.

In the example illustrated in FIG. 6, while the friction stirring is being performed, the applicator 60 (more specifically, at least one nozzle 61) emits the coolant L1 into the case 7 but not into the cover 8. More specifically, while the friction stirring is being performed, the coolant L1 is emitted into the case 7 from the applicator 60 (more specifically, the at least one nozzle 61) without reaching the cover 8.

If the coolant L1 remains in the refrigerant flow channel 91, a product or a part manufactured by the friction stirring may fail to pass the inspection. In such a case, a step of washing the refrigerant flow channel 91 (hereinafter, referred to as "washing step") and a step of drying the refrigerant flow channel 91 are required to be executed.

On the other hand, if the coolant L1 does not reach the cover 8 while the friction stirring is being performed, the coolant L1 does not enter the groove 73v (or the refrigerant flow channel 91) through a gap between the case 7 and the cover 8. Thus, the washing step for the refrigerant flow channel 91 needs not to be executed, or is simplified.

As in the example illustrated in FIG. 6, the case 7 may prevent the coolant L1 from reaching the cover 8.

### (Optional Configurations)

Next, with reference to FIGS. 1 to 29, optional configurations that can be adopted in the method of forming a refrigerant flow channel according to embodiment 1 will be described.

### (Preparation step)

In a first step ST1, the case 7 and the cover 8, which covers the groove 73v of the case 7, are prepared. The first step ST1 is a preparation step.

As in the example illustrated in FIG. 2, the case 7 prepared in the preparation step (first step ST1) has the side walls 71, the end wall 73, and the recess 74 defined by the side walls 71 and the end wall 73. As in the example illustrated in FIG. 1, the case 7 prepared in the preparation step (first step ST1) has a groove 73v formed in the outer surface 73t of the end wall 73. The groove 73v may be segmented by at least one projection 73p.

In the example illustrated in FIG. 2, the side walls 71 and the end wall 73 are formed by integral molding. In the example illustrated in FIG. 2, the case 7 has a box shape. In the example illustrated in FIG. 2, the end wall 73 is a bottom wall 730 defining the bottom of the recess 74.

In the example illustrated in FIG. 2, the side walls 71 include a first side wall 71-1 and a second side wall 71-2. The second side wall 71-2 is disposed opposite to the first side wall 71-1.

The side walls 71 may include the first side wall 71-1, the second side wall 71-2, a third side wall 71-3, and a fourth side wall 71-4. In the example illustrated in FIG. 2, the third side wall 71-3 connects the first side wall 71-1 and the second side wall 71-2. In the example illustrated in FIG. 2, the fourth side wall 71-4 connects the first side wall 71-1 and the second side wall 71-2. The fourth side wall 71-4 is disposed opposite to the third side wall 71-3.

As in the example illustrated in FIG. 4, the end wall 73 of the case 7 may include a step 731 disposed to face an outer edge 81 of the cover 8.

The side walls 71 may include a protrusion (for example, a collar 72) held by holding components 50 (see FIG. 6). The first side wall 71-1 may include a first flange 72-1 held by a first holding component 51a (see FIG. 6). The second side wall 71-2 may include a second flange 72-2 held by a second holding component 51b (see FIG. 6). In the example illustrated in FIG. 2, the first flange 72-1 and the second flange 72-2 each form a part of the collar 72.

In the example illustrated in FIG. 2, the case 7 has the recess 74 that can receive a cooling target object. The cooling target object received in the recess 74 is electrical equipment that produces heat in response to a current flow, for example. The case 7 may be an automobile part (for example, a part of an electric vehicle) installed in an automobile with the electrical equipment contained therein. The electrical equipment producing heat in response to a current flow is contained in the recess 74 while being in contact with the end wall 73, for example.

The cooling target object (more specifically, electrical equipment) received in the recess 74 is, for example, an inverter (more specifically, a device including a circuit for converting direct current into alternating current), a converter (more specifically, an AC-DC converter for converting alternating current into direct current, or a DC-DC converter for converting a DC voltage into another DC voltage), a battery, a charger for charging a battery, a control unit such as an engine control unit, or a substrate carrying a plurality of electronic parts.

The case 7 may include attachment portions 75 where the lid CB (see FIG. 28) covering the recess 74 can be attached. In the example illustrated in FIG. 2, the attachment portions 75 have holes 75h for receiving bolts. The attachment portions 75 may be formed by casting. The outer shape of the attachment portions 75 may be formed by casting, and the holes 75h of the attachment portions 75 may be formed by cutting (more specifically, perforation).

The case 7 prepared in the preparation step (first step ST1) is a casted part, for example. The side walls 71 of the case 7, the end wall 73 of the case 7, and the recess 74 of the case 7 may be formed by casting. Alternatively, the side walls 71, the end wall 73, and the recess 74 may be formed by cutting a block using a cutting tool.

The groove 73v of the end wall 73 (see FIG. 1) may be formed by casting. Alternatively, the groove 73v may be formed by cutting the end wall 73 using a cutting tool.

The case 7 prepared in the preparation step (first step ST1) may include a first port 79a continuous with the groove 73v. Additionally, the case 7 prepared in the preparation step (first step ST1) may include a second port 79b continuous with the groove 73v. One of the first port 79a and the second port 79b functions as an inlet port for supplying a refrigerant to the refrigerant flow channel 91, and the other of the first port 79a and the second port 79b functions as an outlet port for discharging the refrigerant from the refrigerant flow channel 91. Alternatively, as in the example illustrated in FIG. 7, the cover 8 may include a second port 89b continuous with the groove 73v. Still alternatively, as in the example illustrated in FIG. 8, the cover 8 may include a first port 89a continuous with the groove 73v and the second port 89b continuous with the groove 73v.

Alternatively, the first port may be formed by joining the case 7 and the cover 8 by friction stirring. In this case, the first port is formed by a portion of the case 7 and a portion of the cover 8. The second port 79b may be formed by joining the case 7 and the cover 8 by friction stirring. In this case, the second port is formed by a portion of the case 7 and a portion of the cover 8.

If the coolant L1 may enter the groove 73v from first port 79a, the first port 79a may be covered with a lid during the friction stirring welding. If the coolant L1 may enter the groove 73v from the second port 79b, the second port 79b may be covered with a lid during the friction stirring welding.

The case 7 is made of metal, for example. The main component of the material of the case 7 is aluminum, for example. In other words, the case 7 is made of aluminum or made of an aluminum alloy.

As in the example illustrated in FIG. 1, the cover 8 prepared in the preparation step (first step ST1) may have a flat shape. Alternatively, the cover 8 may include a recess or a protrusion. Alternatively, the cover 8 may include a recess or a protrusion. As in the example illustrated in FIG. 7, the cover 8 may include the second port 89b. As in the example illustrated in FIG. 8, the cover 8 may include the first port 89a and the second port 89b.

As in the example illustrated in FIGS. 1 and 3, the method of forming a refrigerant flow channel according to embodiment 1 includes a step of disposing the cover 8 to the case 7 to cover the groove 73v described above with the cover 8. More specifically, the preparation step (first step ST1) includes disposing the cover 8 to the case 7 to cover the groove 73v described above with the cover 8.

The preparation step (first step ST1) may include disposing the cover 8 to the case 7 attached to the workpiece supporter 3 (see FIG. 6). Alternatively, the preparation step (first step ST1) may include attaching the case 7 to the workpiece supporter 3 after the cover 8 has been disposed to the case 7.

The case 7 may be attached to the workpiece supporter 3 manually or using a robot. The cover 8 may be disposed to the case 7 manually or using a robot.

As in the example illustrated in FIG. 5, disposing the cover 8 to the case 7 may include disposing the outer edge 81 of the cover 8 to face the step 731 of the end wall 73. More specifically, the cover 8 may be inserted into a dent 738 formed in the end wall 73 of the case 7, to dispose the outer edge 81 of the cover 8 to face the step 731 of the end wall 73.

As in the example illustrated in FIGS. 9 to 11, the preparation step (first step ST1) may include, after the cover 8 is disposed to the case 7, moving fall-prevention components 67 from a retracted position P2 (see FIG. 9) separated from the cover 8 to an advanced position P1 (see FIGS. 10 and 11) in contact with the cover 8. The fall-prevention components 67 in contact with the cover 8 prevent the cover 8 from falling off the case 7.

In the example illustrated in FIG. 11, the workpiece supporter 3 includes the jig 4 to which the case 7 is attached. In the example illustrated in FIG. 11, the workpiece supporter 3 (more specifically, the jig 4) includes a backing component 40 that supports the case 7.

As in the example illustrated in FIG. 13, the backing component 40 receives pressing force from the friction stirring welding tool T1 via the case 7. In other words, while the case 7 is being friction stirred using the friction stirring welding tool T1, the backing component 40 supports the case 7 against the pressing force received by the case 7 from the friction stirring welding tool T1.

In the example illustrated in FIG. 13, the backing component 40 supports the end wall 73 of the case 7 (more specifically, the inner surface 73n of the end wall 73 of the case 7).

As in the example illustrated in FIG. 11, the backing component 40 may include the first post 42-1 that supports the case 7 (more specifically, the end wall 73 of the case 7). As in the example illustrated in FIG. 14, the first post 42-1 may be extendable so that the position of the leading end of the first post 42-1 can be adjusted. With the position of the leading end of the first post 42-1 adjusted, the case 7 is suitably supported by the leading end of the first post 42-1.

As in the example illustrated in FIG. 11, the backing component 40 may include the second post 42-2 that supports the case 7 (more specifically, the end wall 73 of the case 7). As in the example illustrated in FIG. 15, the second post 42-2 may be extendable so that the position of the leading end of the second post 42-2 can be adjusted. With the position of the leading end of the second post 42-2 adjusted, the case 7 is suitably supported by the leading end of the second post 42-2.

As in the example illustrated in FIG. 11, the length of the second post 42-2 may be different from the length of the first post 42-1. In this case, a plurality of posts 42 including the first post 42-1 and the second post 42-2 can suitably support the case 7 with a relatively complex shape.

The jig 4 may include a base 64 that supports the backing component 40 (for example, the plurality of posts 42 including the first post 42-1 and the second post 42-2). In the example illustrated in FIG. 16, the base 64 is fixed to a table 31 of the workpiece supporter 3.

As in the example illustrated in FIG. 16, the method of forming a refrigerant flow channel according to embodiment 1 includes a step of attaching the case 7 to the workpiece supporter 3 (more specifically, the jig 4). More specifically, the preparation step (first step ST1) includes attaching the case 7 to the workpiece supporter 3 (more specifically, the jig 4).

In the example illustrated in FIG. 11, the workpiece supporter 3 (more specifically, the jig 4) is provided with the holding components 50 that hold the case 7. In this case, the case 7 is attached to the workpiece supporter 3 (more specifically, the jig 4) by attaching the case 7 to the holding components 50.

In the example illustrated in FIG. 11, the holding components 50 hold the side walls 71 of the case 7. The holding components 50 may include the first holding component 51a that holds the first side wall 71-1 of the case 7 and the second holding component 51b that holds the second side wall 71-2 of the case 7.

The holding components 50 may hold the collar 72 on the side walls 71 of the case 7. As in the example illustrated in FIG. 11, the first holding component 51a may hold the first flange 72-1 on the first side wall 71-1, and the second holding component 51b may hold the second flange 72-2 on the second side wall 71-2.

As in the example illustrated in FIGS. 9 and 10, the workpiece supporter 3 (more specifically, the jig 4) may include the fall-prevention components 67 described above. The workpiece supporter 3 (more specifically, the jig 4) may also include actuators 68 for moving the fall-prevention components 67 described above from the retracted position P2 described above to the advanced position P1 described above.

In the example illustrated in FIGS. 9 and 10, the fall-prevention components 67 include a first fall-prevention component 67-1 and a second fall-prevention component 67-2. The workpiece supporter 3 (more specifically, the jig 4) may include a first actuator 68-1 for moving the first fall-prevention component 67-1 between a first advanced position P1-1 in contact with the cover 8 and a first retracted position P2-1 separated from the cover 8. The workpiece supporter 3 (more specifically, the jig 4) may also include a second actuator 68-2 for moving the second fall-prevention component 67-2 between a second advanced position P1-2 in contact with the cover 8 and a second retracted position P2-2 separated from the cover 8.

### (Joining Step)

In a second step ST2, the case 7 and the cover 8 are joined by friction stirring such that the refrigerant flow channel 91 is formed by the groove 73v and the cover 8. The second step ST2 is a joining step.

In the example illustrated in FIGS. 12 and 13, the joining step (second step ST2) is executed with the case 7 supported by the workpiece supporter 3 (more specifically, the backing component 40). More specifically, while the friction stirring is being performed, the end wall 73 of the case 7 (more specifically, the inner surface 73n of the end wall 73) is supported by the backing component 40. With the end wall 73 of the case 7 supported by the backing component 40, the warpage of the end wall 73 caused by the friction stirring welding tool T1 pressing the end wall 73 is suppressed.

In the example illustrated in FIG. 13, the joining step (second step ST2) is executed with the case 7 held by the workpiece supporter 3 (more specifically, the holding components 50). More specifically, while the friction stirring is being performed, the side walls 71 of the case 7 are held by the holding components 50. While the friction stirring is being performed, the case 7 is held by the holding components 50, whereby the misalignment of the case 7 is prevented. Furthermore, with the side walls 71 of the case 7 held by the holding components 50, the friction stirring welding tool T1, which moves relative to the holding components 50 during the friction stir, does not interfere with the holding components 50.

The joining step (second step ST2) includes moving the friction stirring welding tool T1 in a rotation state relative to the case 7 and the cover 8 to join the case 7 and the cover 8 by friction stirring.

In the example illustrated in FIG. 13, the joining step (second step ST2) includes moving the friction stirring welding tool T1 in a rotation state relative to the case 7 and the cover 8 while the friction stirring welding tool T1 presses the cover 8 and the end wall 73 of the case 7.

In the example illustrated in FIGS. 17 to 20, the joining step (second step ST2) includes moving the friction stirring welding tool T1 in a rotation state relative to the case 7 and the cover 8 along the first path PA (see FIG. 21) to join the case 7 and the cover 8 by friction stirring.

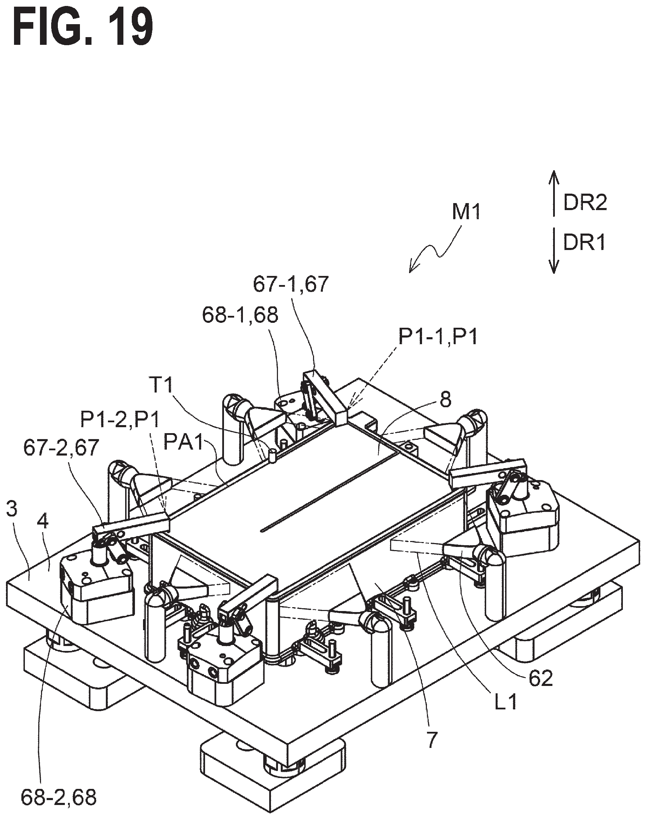

In the example illustrated in FIG. 19, the joining step (second step ST2) includes moving the friction stirring welding tool T1 in a rotational state relative to the case 7 and the cover 8 along a boundary PA1 between the case 7 and the cover 8. In other words, the first path PA described above includes the boundary PA1 between the case 7 and the cover 8. In this case, the case 7 and the cover 8 are butt-joined by friction stirring. The boundary PA1 between the case 7 and the cover 8 is flattened.

In the example illustrated in FIG. 13, the joining step (second step ST2) includes butt-joining the step 731 of the end wall 73 (see FIG. 5) and the outer edge 81 of the cover 8 (see FIG. 5) by friction stirring. In other words, the first path PA described above includes a boundary between the step 731 of the case 7 and the outer edge 81 of the cover 8.

In the example illustrated in FIG. 13, the case 7 inverted is supported by the workpiece supporter 3 (more specifically, the backing component 40). Some of the plurality of posts 42 may support the end wall 73 of the case 7 in the vicinity of the side walls 71.

As can be recognized in FIGS. 1 and 21, the first path PA may include a path PA2 along a region where the case 7 and the cover 8 overlap. In the example illustrated in FIG. 21, the first path PA includes a path PA2-1 passing through a center portion 83 of the cover 8. In this case, as in the example illustrated in FIG. 22, the joining step (second step ST2) includes moving the friction stirring welding tool T1 in a rotation state relative to the cover 8 along the surface of the cover 8 with the friction stirring welding tool T1 pressing the center portion 83 of the cover 8 toward the end wall 73 of the case 7. Thus, the case 7 and the center portion 83 of the cover 8 are lap-joined by friction stirring.

When the case 7 and the center portion 83 of the cover 8 are lap-joined, outward warpage of the center portion 83 of the cover 8 due to pressure of the refrigerant flowing in the refrigerant flow channel 91 is suppressed while the refrigerant flow channel 91 is used.

In the example illustrated in FIG. 22, at least one of the plurality of posts 42 is located vertically below the center portion 83 of the cover 8. More specifically, when the case 7 and the center portion 83 of the cover 8 are lap-joined, at least one of the plurality of posts 42 supports the end wall 73 of the case 7 vertically below the friction stirring welding tool T1.

In the example illustrated in FIG. 21, the first path PA includes both the boundary PA1 between the case 7 and the cover 8 and the path PA2-1 passing through the center portion 83 of the cover 8. In this case, the case 7 and the cover 8 are butt-joined by friction stir, and the case 7 and the center portion 83 of the cover 8 are lap-joined by friction stirring.

As in the example illustrated in FIG. 13, the friction stirring is performed with the case 7 and the cover 8 pressed in the first direction DR1 by the friction stirring welding tool T1. The workpiece supporter 3 (more specifically, the backing component 40) supports the case 7 against the pressing force received by the case 7 and the cover 8 from the friction stirring welding tool T1.

In the example illustrated in FIG. 11, the first direction DR1 matches the direction from the end wall 73 of the case 7 toward an inner space SP of the recess 74 of the case 7. In the example illustrated in FIG. 11, the end wall 73 is a wall disposed at end portions of the side walls 71 on the second direction DR2 side. In the example illustrated in FIG. 11, the end wall 73 is connected to an end portion of the first side wall 71-1 on the second direction DR2 side, and is connected to an end portion of the second side wall 71-2 on the second direction DR2 side.

As in the example illustrated in FIG. 17, the friction stirring described above may start with the fall-prevention components 67 described above being at the advanced position P1 in contact with the cover 8. In this case, the cover 8 is prevented from falling off the case 7 when the friction stirring starts.

The joining step (second step ST2) may include moving the fall-prevention components 67 (for example, the first fall-prevention component 67-1) from the advanced position P1 described above to the retracted position P2 described above, in response to the friction stirring welding tool T1 approaching the fall-prevention components 67 (for example, the first fall-prevention component 67-1). The joining step (second step ST2) may also include moving the fall-prevention components 67 (for example, the first fall-prevention component 67-1) from the retracted position P2 described above to the advanced position P1 described above in response to the friction stirring welding tool T1 moving away from the advanced position P1 described above.

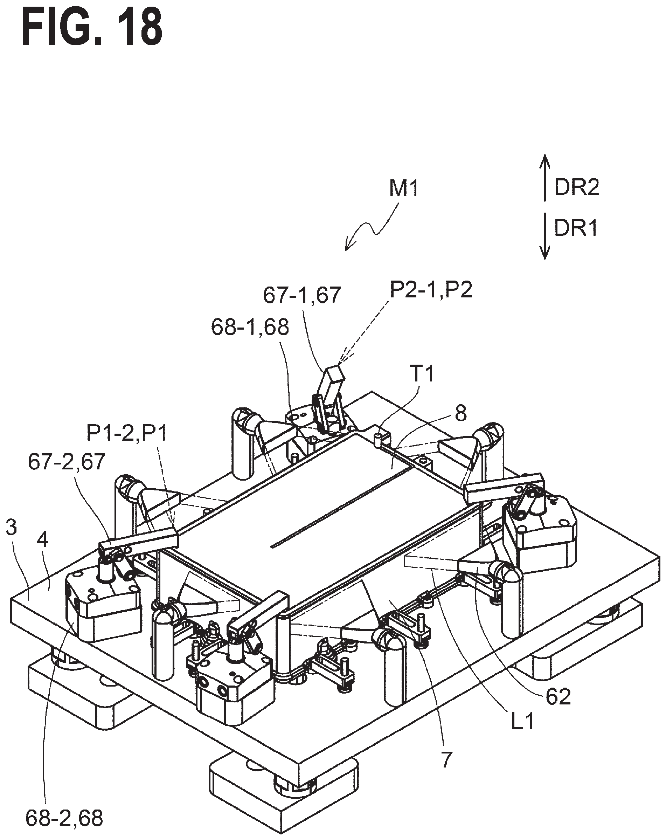

More specifically, as in the example illustrated in FIGS. 17 and 18, the joining step (second step ST2) may include retracting the first fall-prevention component 67-1 from the first advanced position P1-1 to the first retracted position P2-1 to move the first fall-prevention component 67-1 away from the cover 8 in response to the friction stirring welding tool T1 approaching the first fall-prevention component 67-1. As in the example illustrated in FIGS. 18 and 19, the joining step (second step ST2) may include moving the first fall-prevention component 67-1 back from the first retracted position P2-1 to the first advanced position P1-1 in response to the friction stirring welding tool T1 moving away from the first advanced position P1-1 described above.

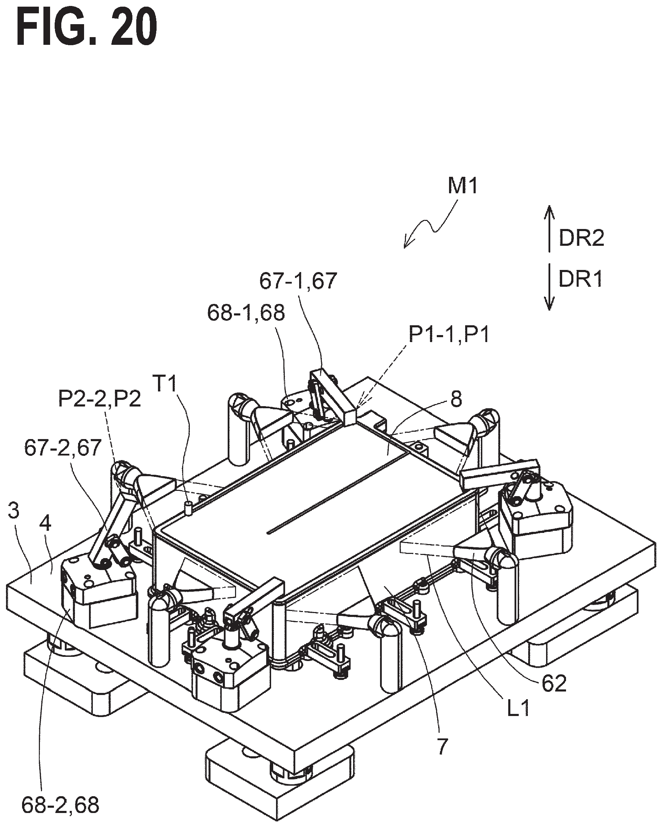

As in the example illustrated in FIGS. 17 and 18, the joining step (second step ST2) may include retracting the first fall-prevention component 67-1 to move the first fall-prevention component 67-1 away from the cover 8, with the second fall-prevention component 67-2 maintained at the second advanced position P1-2 described above, in response to the friction stirring welding tool T1 approaching the first fall-prevention component 67-1. As in the example illustrated in FIGS. 19 and 20, the joining step (second step ST2) may include retracting the second fall-prevention component 67-2 to move the second fall-prevention component 67-2 away from the cover 8 with the first fall-prevention component 67-1 maintained at the first advanced position P1-1 described above, in response to the friction stirring welding tool T1 approaching the second fall-prevention component 67-2.

### (Coolant Emission Step)

In a third step ST3, the coolant L1 is emitted into the case 7. The third step ST3 is a coolant emission step. The coolant emission step (third step ST3) is performed while the friction stirring is being performed. In other words, the coolant emission step (third step ST3) is performed while the joining step (second step ST2) is being performed.

The coolant emission step (third step ST3) may start before the joining step (second step ST2) starts. Alternatively, the coolant emission step (third step ST3) may start simultaneously with the joining step (second step ST2). The coolant emission step (third step ST3) may be started manually or based on an instruction from a controller.

Execution of the coolant emission step (third step ST3) may be stopped after the joining step (second step ST2) is completed. Alternatively, execution of the coolant emission step (third step ST3) may be stopped immediately upon completion of the joining step (second step ST2). Execution of the coolant emission step (third step ST3) may be stopped manually or based on an instruction from the controller.

While the friction stirring is being performed, the coolant L1 is emitted into the case 7, whereby the warpage of the case 7 due to the heat produced by the friction stirring is suppressed.

In the example illustrated in FIG. 13, while the friction stirring is being performed, the coolant L1 is applied to an inner surface 7n of the case 7 (more specifically, the inner surface 7n of the case 7 defining the recess 74). More specifically, while the friction stirring is being performed, the applicator 60 (more specifically, the at least one nozzle 61) emits the coolant L1 to the inner surface 7n of the case 7.

The inner surface 7n of the case 7 and the cover 8 covering the groove 73v are separated by the side walls 71 of the case 7 and the end wall 73 of the case 7. Thus, the coolant L1 emitted toward the inner surface 7n of the case 7 does not reach the cover 8. Therefore, the coolant L1 emitted toward the inner surface 7n of the case 7 does not enter groove 73v (or the refrigerant flow channel 91) through the gap between the case 7 and the cover 8.

In the example illustrated in FIG. 13, while the friction stirring is being performed, the coolant L1 is applied to the inner surface 73n of the end wall 73. With the coolant L1 applied to the inner surface 73n of the end wall 73, warpage of the end wall 73 due to heat generated by the friction stirring is suppressed.

When the coolant L1 is applied to the inner surface 73n of the end wall 73 (more specifically, when the coolant L1 is ejected onto the inner surface 73n of the end wall 73), the side walls 71 prevent the coolant L1 from reaching the cover 8. More specifically, the side walls 71 prevent the coolant L1 from going around toward the cover 8. Therefore, the coolant L1 applied to the inner surface 73n of the end wall 73 does not enter the groove 73v (or the refrigerant flow channel 91) through the gap between the case 7 and the cover 8.

In the example illustrated in FIG. 13, while the friction stirring is being performed, the end wall 73 is supported by the backing component 40, and the coolant L1 is applied to the inner surface 73n of the end wall 73. In this case, warpage of the end wall 73 due to the friction stirring is suppressed by both the backing component 40 and the coolant L1.

In the example illustrated in FIG. 13, while the friction stirring is being performed, the coolant L1 is emitted from the at least one nozzle 61 toward the inner surface 7n of the case 7 (more specifically, the inner surface 73n of the end wall 73). While the friction stirring is being performed, the at least one nozzle 61 may eject the coolant L1 toward the inner surface 7n of the case 7 (more specifically, the inner surface 73n of the end wall 73). The at least one nozzle 61 may be attached to the backing component 40 (for example, the first post 42-1) that supports the end wall 73. As in the example illustrated in FIG. 23, the plurality of nozzles 61 for emitting the coolant onto the inner surface 7n of the case 7 may be attached to the backing component 40 (for example, the first post 42-1) that supports the end wall 73.

As in the example illustrated in FIG. 24, the at least one nozzle 61 (more specifically, the plurality of nozzles 61) of the applicator 60 may emit the coolant L1 onto substantially the entire inner surface 73n of the end wall 73, excluding the portion of the inner surface 73n of the end wall 73 in contact with the backing component 40.

When the coolant L1 reaches substantially the entire inner surface 73n of the end wall 73, excluding the portion of the inner surface 73n of the end wall 73 in contact with the backing component 40, the warpage of the end wall 73 due to the heat produced by the friction stirring is suppressed regardless of the position of the friction stirring by the friction stirring welding tool T1. Therefore, there is no need to move the at least one nozzle 61 in response to a change in the position of the friction stirring by the friction stirring welding tool T1.

Alternatively or additionally, as in the example illustrated in FIG. 24, while the friction stirring is being performed, the coolant L1 may be emitted from the at least one nozzle 61 onto the inner surfaces 71n of the side walls 71.

In the example illustrated in FIG. 13, while the friction stirring is being performed, the coolant L1 is applied to the outer surfaces 71t of the side walls 71. More specifically, while the friction stirring is being performed, the applicator 60 emits the coolant L1 onto the outer surfaces 71t of the side walls 71.

The coolant L1 applied to the outer surfaces 71t of the side walls 71 cools the side walls 71. Cooling the side walls 71 also indirectly cools the end wall 73. Thus, the warpage of the end wall 73 (especially the outer edge of the end wall 73) by the heat produced by the friction stirring is suppressed.

The outer surfaces 71t of the side walls 71 of the case 7 and the cover 8 covering the groove 73v are spaced apart. Therefore, the coolant L1 applied to the outer surfaces 71t of the side walls 71 of the case 7 does not reach the cover 8. In the example illustrated in FIG. 13, the coolant L1 emitted toward the outer surfaces 71t of the side walls 71 of the case 7 does not enter the groove 73v (or the refrigerant flow channel 91) through the gap between the case 7 and the cover 8.

In the example illustrated in FIG. 13, while the friction stirring is being performed, the coolant L1 is emitted from at least one nozzle 62 onto the outer surfaces 71t of the side walls 71. In this specification, to distinguish between the nozzle 61 for emitting the coolant L1 onto the inner surface 7n of the case 7 and the nozzle 62 for emitting the coolant L1 onto the outer surfaces 71t of the side walls 71 of the case 7, the latter will be referred to as "outer nozzle 62".

In the example illustrated in FIG. 13, the at least one outer nozzle 62 is supported by the workpiece supporter 3 (more specifically, the jig 4).

As in the example illustrated in FIG. 13, while the friction stirring is being performed, the coolant L1 may be applied to both the inner surface 7n of the case 7 (more specifically, the inner surface 73n of the end wall 73) and the outer surfaces 71t of the side walls 71 of the case 7. Alternatively, as in the example illustrated in FIG. 24, while the friction stirring is being performed, the coolant L1 may be applied only to the inner surface 7n of the case 7. Still alternatively, while the friction stirring is being performed, the coolant L1 may be applied only to the outer surfaces 71t of the side walls 71 of the case 7.

The coolant L1 is, for example, a water-soluble coolant. The main component of the water-soluble coolant is water, for example. The water-soluble coolant may include a water-soluble fluid (for example, a water-soluble cutting fluid or a water-soluble grinding fluid) and/or a surfactant.

The coolant L1 may be a liquid with the same components as the cutting fluid used for a workpiece (for example, the case 7 or other workpieces) when the workpiece (for example, the case 7 or other workpieces) is being cut.

### (Cutting Step)

The method of forming a refrigerant flow channel according to embodiment 1 may include a step of cutting at least one of the case 7 and the cover 8 using a cutting tool T2 (hereinafter, referred to as "cutting step"). In other words, in a fourth step ST4, at least one of the case 7 and the cover 8 may be cut using the cutting tool T2.

In the example illustrated in FIGS. 25 and 26, the cutting step (fourth step ST4) is performed after the joining step is performed (in other words, after joining of the case 7 and the cover 8 by the friction stirring is completed). In this case, after the joining step (second step ST2) is performed and before the cutting step (fourth step ST4) is performed, the friction stirring welding tool T1 held by a spindle 151 described below may be replaced with the cutting tool T2. The friction stirring welding tool T1 held on the spindle 151 can be replaced with the cutting tool T2 using an automatic tool changer 19 or manually.

In the example illustrated in FIG. 26, the cutting step (fourth step ST4) includes cutting a portion of a joint region JR between the end wall 73 of the case 7 and the cover 8.

The cutting step (fourth step ST4) may include removing burrs generated during friction stir, using the cutting tool T2 (for example, a milling tool T2-1).

Alternatively or additionally, the cutting step (fourth step ST4) may include forming a hole (for example, holes 75h of attachment portions 75 illustrated in FIG. 2) in the case 7 and/or the cover 8 using the cutting tool T2 (for example, a drilling tool T2-2). Alternatively or additionally, the cutting step (fourth step ST4) may include forming a screw thread in the hole described above (for example, the hole formed in the case 7) using the cutting tool T2 (for example, a tap tool).

In the example illustrated in FIG. 25, the cutting step (fourth step ST4) includes moving the cutting tool T2 in a rotation state relative to the case 7 and the cover 8 along a second path PB to cut at least one of the case 7 and the cover 8 by the cutting tool T2.

The second path PB may overlap the first path PA described above. For example, the cutting tool T2 (for example, the milling tool T2-1) in a rotation state may move relative to the case 7 and the cover 8 along the second path PB that overlaps the first path PA described above. In this case, the burrs generated during friction stirring are removed by the cutting tool T2 (for example, the milling tool T2-1).

The second path PB may include a path parallel to the first direction DR1. For example, by moving the cutting tool T2 (for example, the drilling tool T2-2) in a rotation state along the second path PB, a hole in the case 7 and/or the cover 8 may be formed by the cutting tool T2 (for example, the drilling tool T2-2). Alternatively or additionally, by moving the cutting tool T2 (for example, a tap tool) in a rotation state along the second path PB, a screw thread may be formed in the hole described above (for example, the hole formed in the case 7) by the cutting tool T2 (for example, a tap tool).

In the example illustrated in FIG. 26, the cutting step (fourth step ST4) is performed after the joining step (second step ST2). Alternatively, or additionally, the cutting step (fourth step ST4) may be performed before the joining step (second step ST2). Still alternatively, the cutting step (fourth step ST4) may be omitted.

### (Method of Manufacturing Structure EB Including Refrigerant Flow Channel)

A method of manufacturing a structure EB including the refrigerant flow channel according to embodiment 1 includes, in addition to the first step ST1 to the third step ST3 described above (alternatively, in addition to the first step ST1 to the fourth step ST4 described above), (1) a step of disposing the cooling target object OB in the recess 74 of the case 7 (see FIG. 27) and (2) a step of fixing the lid CB to the case 7 so that the recess 74 of the case 7 is filled by the lid CB (see FIG. 28).

The step of disposing the cooling target object OB in the recess 74 of the case 7 is performed after the joining of the case 7 and the cover 8 by friction stirring is completed. The step of disposing the cooling target object OB in the recess 74 of the case 7 may be performed after the cutting step (fourth step ST4). Since the cooling target object has already been described, a redundant description on the cooling target object will be omitted.

The step of fixing the lid CB to the case 7 is performed after the step of disposing the cooling target object OB in the recess 74 of the case 7. The fixing of the lid CB to the case 7 may be performed by inserting a bolt into the holes 75h (see FIG. 27). Alternatively, the fixing of the lid CB to the case 7 may be performed by friction stirring welding.

### (Machine Tool 1)

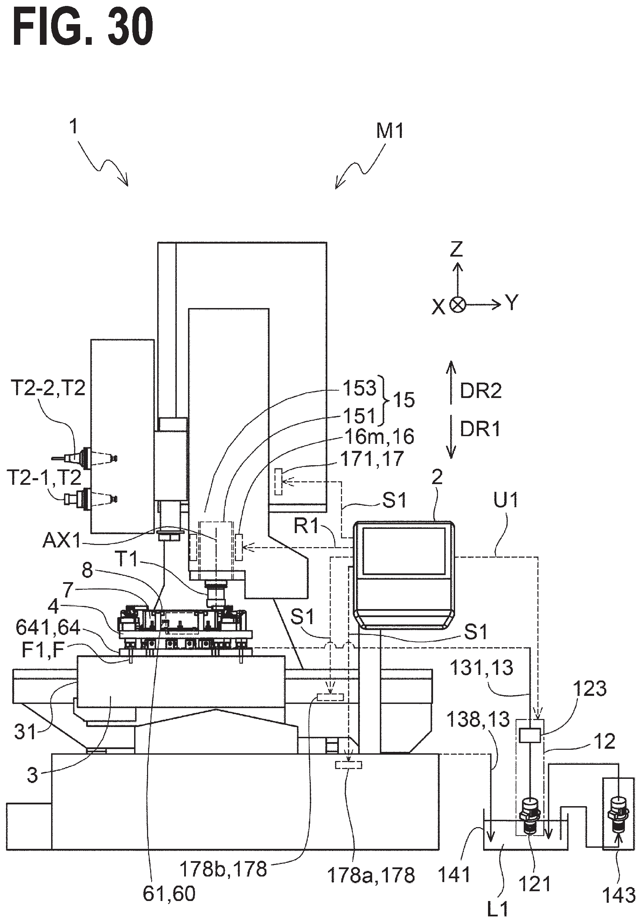

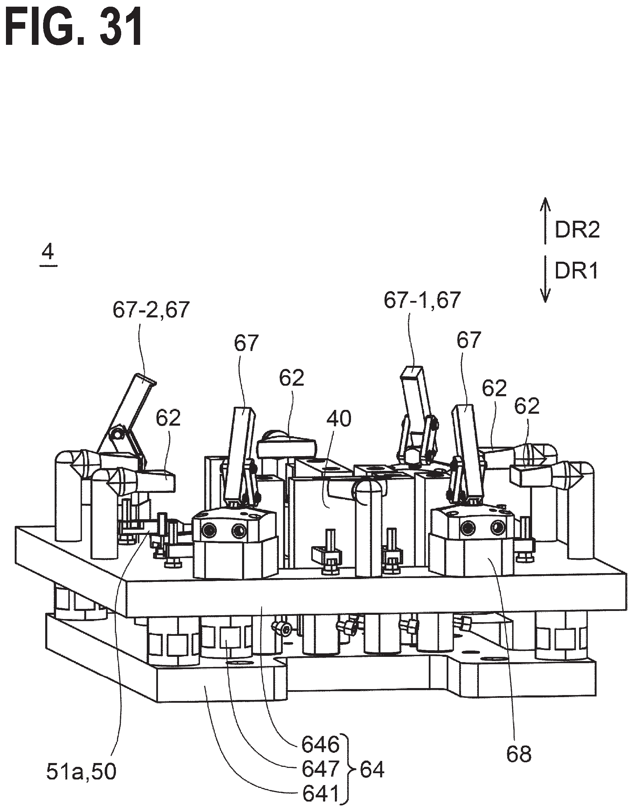

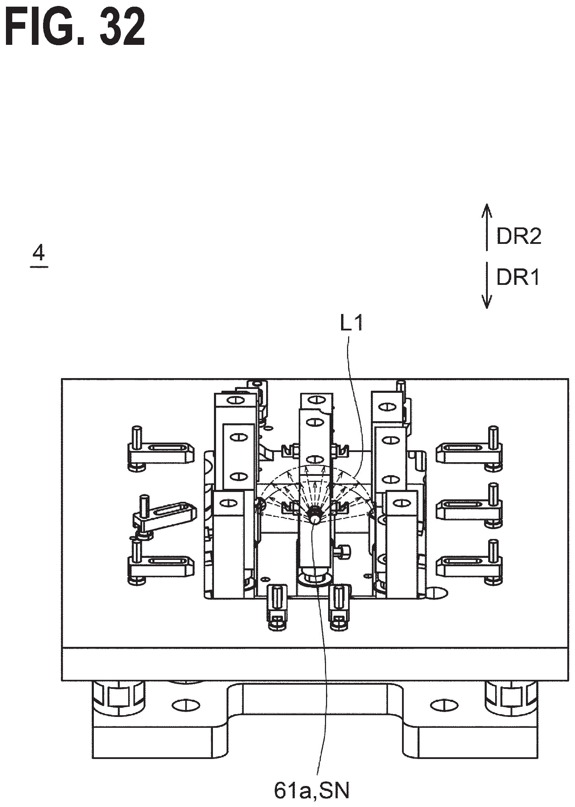

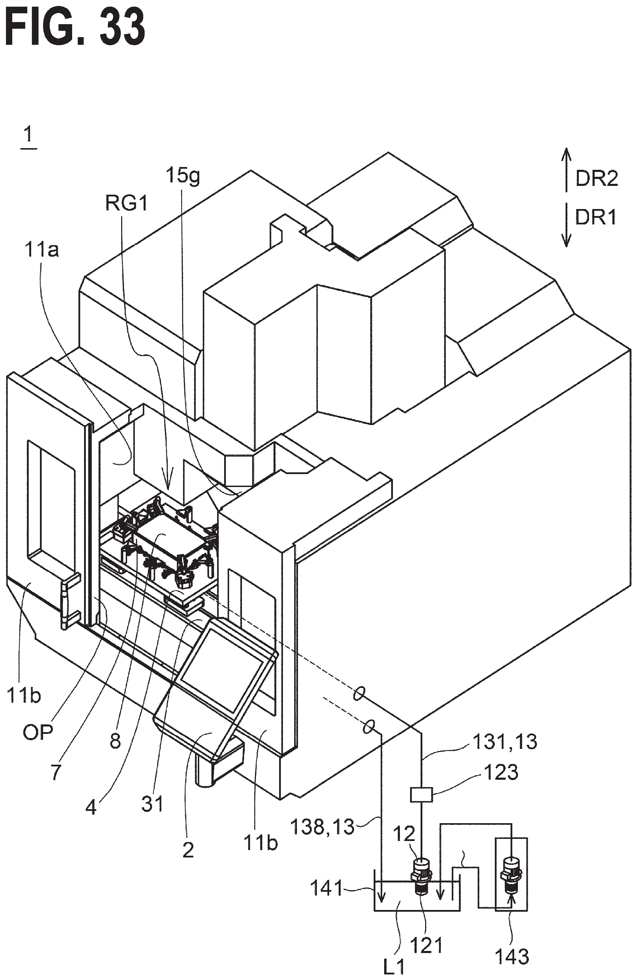

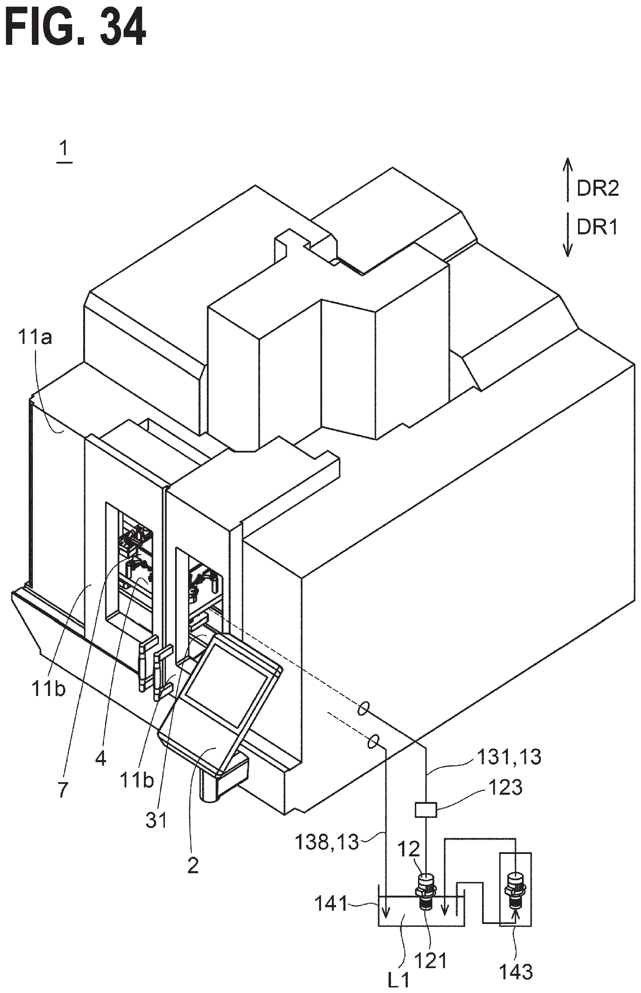

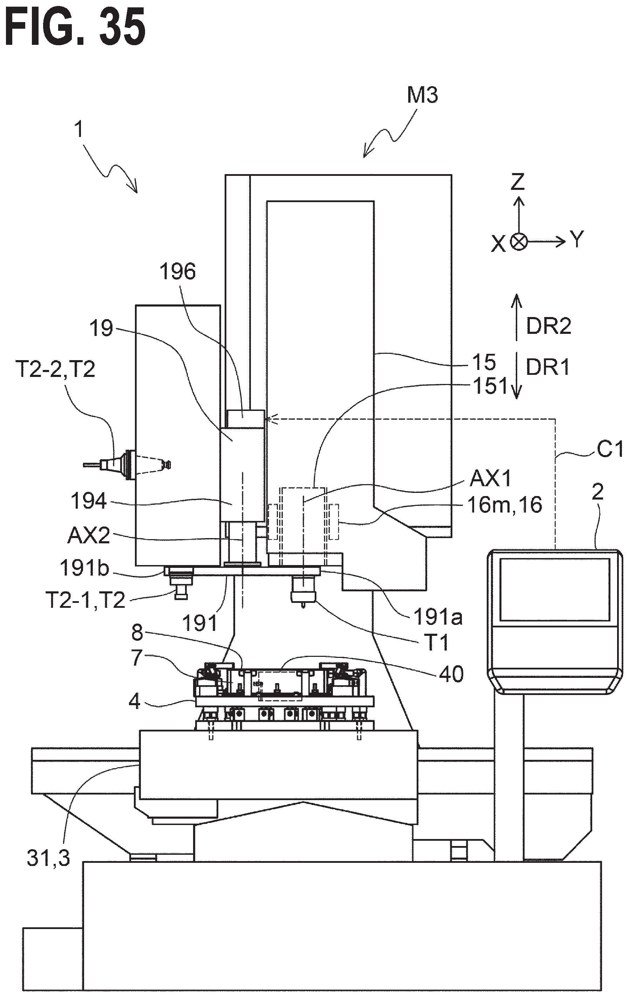

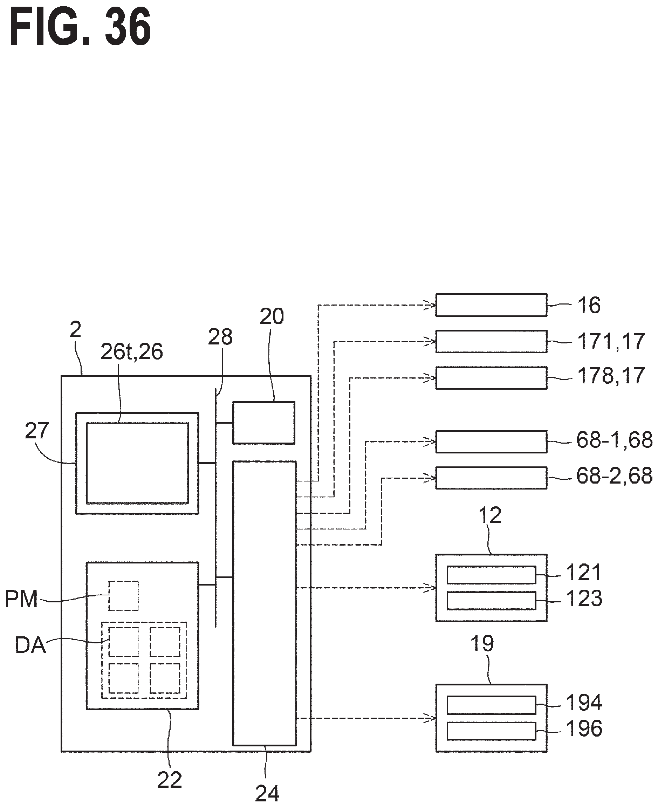

The machine tool 1 according to embodiment 1 is described with reference to FIGS. 1 to 36. FIG. 30 is a schematic front view schematically illustrating a part of the machine tool 1 according to embodiment 1. FIG. 31 is a schematic perspective view schematically illustrating an example of the jig 4 supporting the case 7 and the cover 8. FIG. 32 is a diagram illustrating an example of a spray nozzle SN. FIGS. 33 and 34 are schematic perspective views schematically illustrating the machine tool 1 according to embodiment 1. FIG. 35 is a schematic front view schematically illustrating a part of the machine tool 1 according to embodiment 1. FIG. 36 is a diagram schematically illustrating how a controller 2 can control a plurality of control target devices.

As in the example illustrated in FIG. 30, the machine tool 1 includes the workpiece supporter 3, the spindle 151, a support 153, a rotational driver 16, a mover 17, a supplier 12, and the applicator 60.

As in the example illustrated in FIG. 30, the workpiece supporter 3 supports the case 7 and the cover 8. As in the example illustrated in FIG. 11, the case 7 has the recess 74 defined by the side walls 71 and the end wall 73, and the groove 73v formed in the outer surface 73t of the end wall 73. The cover 8 covers the groove 73v of the case 7. The case 7 and the cover 8 have already been described, and the redundant description on the case 7 and the cover 8 will be omitted.

As in the example illustrated in FIG. 30, the spindle 151 can hold the friction stirring welding tool T1. The friction stirring welding tool T1 joins the case 7 and the cover 8 by friction stirring such that the refrigerant flow channel 91 is formed by the groove 73v and the cover 8.

The support 153 supports the spindle 151 to be rotatable about a first axis AX1. The rotational driver 16 rotates the spindle 151 about the first axis AX1. The rotational driver 16 may include a motor 16m rotating the spindle 151 about the first axis AX1.

In the example illustrated in FIG. 30, the machine tool 1 includes a machining head 15 including the spindle 151 described above and the support 153 described above. The machining head 15 may further include the motor 16m described above.

The mover 17 moves the machining head 15 (more specifically, the spindle 151 and the support 153) relative to the workpiece supporter 3. The mover 17 may include a machining head mover 171 for moving the machining head 15. Alternatively or additionally, the mover 17 may include a table mover 178 for moving the table 31 of the workpiece supporter 3.

The supplier 12 supplies the coolant L1 to the applicator 60. While the friction stirring is being performed, the applicator 60 emits the coolant L1 into the case 7. As in the example illustrated in FIG. 12, the applicator 60 may include the at least one nozzle 61 for emitting the coolant L1 onto the inner surface 7n of the case 7. The coolant L1 emitted onto the inner surface 7n of the case 7 does not reach the cover 8. Therefore, the coolant L1 emitted onto the inner surface 7n of the case 7 does not enter the groove 73v (or the refrigerant flow channel 91) through the gap between the case 7 and the cover 8.

As in the example illustrated in FIG. 12, the applicator 60 may include a first nozzle 61a for emitting the coolant L1 onto the inner surface 73n of the end wall 73 of the case 7. Alternatively or additionally, as in the example illustrated in FIG. 24, the applicator 60 may include a second nozzle 61b for emitting the coolant L1 onto the inner surface 73n of the end wall 73 of the case 7 and/or the inner surfaces 71n of the side walls 71 of the case 7.

Alternatively or additionally, the applicator 60 may include the at least one outer nozzle 62 for emitting the coolant L1 onto the outer surfaces 71t of the side walls 71 of the case 7.

The machine tool 1 according to embodiment 1 includes the applicator 60 for emitting the coolant L1 into the case 7. The applicator 60 emits the coolant L1 into the case 7 when the case 7 and the cover 8 are joined by friction stirring. Thus, the warpage of the case 7 due to heat produced by the friction stirring is suppressed.

In the example illustrated in FIGS. 12 and 24, the applicator 60 emits the coolant L1 into the case 7 among the case 7 and the cover 8. More specifically, while the friction stirring is being performed, the coolant L1 is emitted into the case 7 from the applicator 60 without reaching the cover 8.

When the coolant L1 does not reach the cover 8 while the friction stirring is being performed, the coolant L1 does not enter the groove 73v (or the refrigerant flow channel 91) through the gap between the case 7 and the cover 8. Thus, the washing step for the refrigerant flow channel 91 needs not to be executed, or is simplified.

In the example illustrated in FIGS. 12 and 24, when the case 7 and the cover 8 are supported by the workpiece supporter 3 (more specifically, the jig 4), the applicator 60 is disposed to face the case 7 without facing the cover 8. In this case, the coolant L1 emitted from the applicator 60 is more effectively prevented from entering the groove 73v (or the refrigerant flow channel 91) through the gap between the case 7 and the cover 8.

### (Optional Configurations)

Next, with reference to FIGS. 1 to 36, optional configurations that can be adopted in the machine tool 1 according to embodiment 1 will be described.

### (Workpiece Supporter 3)

In the example illustrated in FIG. 16, the machine tool 1 includes the workpiece supporter 3. The workpiece supporter 3 includes the jig 4 to which the case 7 is attached. The workpiece supporter 3 may further include the table 31 to which the jig 4 is attached.

In the example illustrated in FIG. 16, the machine tool 1 (more specifically, the mover 17) includes the machining head mover 171 for moving the machining head 15. In the example illustrated in FIG. 16, the machining head mover 171 can move the machining head 15 in a direction (Z direction) substantially parallel with the vertical direction. The machining head mover 171 may move the machining head 15 in a direction substantially parallel with the horizontal plane.

In the example illustrated in FIG. 16, the machine tool 1 (more specifically, the mover 17) includes the table mover 178 for moving the table 31. The table mover 178 can move the table 31 in a direction substantially parallel with the horizontal plane. In the example illustrated in FIG. 16, the table mover 178 includes an X-axis mover 178a for moving the table 31 in a direction along the X axis, which is substantially parallel with the horizontal plane. The table mover 178 may include a Y-axis mover 178b for moving the table 31 in a direction along the Y axis, which is perpendicular to both the vertical direction and the X axis.

In the example illustrated in FIG. 11, the workpiece supporter 3 (more specifically, the jig 4) includes the backing component 40 that supports the end wall 73 of the case 7. The backing component 40 receives the pressing force from the friction stirring welding tool T1 via the case 7 and the cover 8, and supports the end wall 73 of the case 7.

The backing component 40 suppresses the warpage of the end wall 73 caused by the friction stirring welding tool T1 pressing the end wall 73.

In the example illustrated in FIG. 11, the backing component 40 has the first post 42-1 supporting the case 7. The backing component 40 may have the plurality of posts 42, including the first post 42-1 and the second post 42-2. Each of the plurality of posts 42 receives the pressing force from the friction stirring welding tool T1 via the case 7 and the cover 8. In other words, while the case 7 and the cover 8 are being friction stirred using the friction stirring welding tool T1, each of the plurality of posts 42 supports the case 7 against the pressing force received by the case 7 and the cover 8 from the friction stirring welding tool T1.

In the example illustrated in FIG. 11, the first post 42-1 includes the first end 42a-1 coming into contact with the inner surface 73n of the end wall 73 of the case 7. In the example illustrated in FIG. 11, the second post 42-2 includes the second end 42a-2 coming into contact with the inner surface 73n of the end wall 73 the case 7.

In the example illustrated in FIG. 11, the position of the first end 42a-1 is different from the position of the second end 42a-2 in the direction along the first direction DR1. More specifically, the second end 42a-2 is positioned more on the first direction DR1 side (more specifically, the lower side) than the first end 42a-1.

In the example illustrated in FIG. 13, a first supply flow channel 44 for supplying the coolant L1 to the first nozzle 61a is formed inside the backing component 40 (more specifically, inside the first post 42-1).

In the example illustrated in FIG. 11, the jig 4 includes the base 64 supporting the backing component 40. In the example illustrated in FIG. 11, the base 64 supports a plurality of posts 42 including the first post 42-1 and the second post 42-2. The base 64 can be attached to the table 31 of the workpiece supporter 3. The base 64 can be detached from the table 31.

In the example illustrated in FIG. 14, the position of the first end 42a-1 of the first post 42-1 relative to the base 64 is adjustable in the first direction DR1 (and the second direction DR2). In the example illustrated in FIG. 15, the position of the second end 42a-2 of the second post 42-2 relative to the base 64 is adjustable in the first direction DR1 (and the second direction DR2).

As in the example illustrated in FIG. 14, the first post 42-1 may be extendable. More specifically, the first post 42-1 may include a first portion 421-1 fixed to the base 64 and a second portion 421-2 movable relative to the first portion 421-1 in the second direction DR2 (for example, the upper direction). In the example illustrated in FIG. 14, the first end 42a-1 described above is disposed on the second portion 421-2. The first nozzle 61a described above is disposed on the second portion 421-2.

When the first post 42-1 is extended, the position of the first end 42a-1 of the first post 42-1 is adjusted in a direction away from the base 64 (in other words, in the second direction DR2). When the first post 42-1 is contracted, the position of the first end 42a-1 of the first post 42-1 is adjusted in a direction toward the base 64 (in other words, in the first direction DR1).

The first post 42-1 may include a first spring 64-1 that biases the second portion 421-2 in the second direction DR2 (for example, the upper direction). Alternatively or additionally, the first post 42-1 may include a fluid pressure cylinder (for example, an air cylinder or a hydraulic cylinder) for moving the second portion 421-2 in the second direction DR2 (for example, the upper direction).

In the example illustrated in FIG. 14, when the second portion 421-2 is pressed by the case 7, the first spring 64-1 is contracted. Thus, the height of the second portion 421-2 is automatically adjusted for the shape of the case 7 or a manufacturing error of the case 7.

As in the example illustrated in FIG. 11, the first post 42-1 may include a first fixing component 65-1 that fixes the position of the second portion 421-2 relative to the first portion 421-1. In this case, after the height of the second portion 421-2 is adjusted, the height of the second portion 421-2 can be fixed using the first fixing component 65-1.

As in the example illustrated in FIG. 15, the second post 42-2 may be extendable. More specifically, the second post 42-2 may include a third portion 421-3 fixed to the base 64 and a fourth portion 421-4 movable relative to the third portion 421-3 in the second direction DR2 (for example, the upper direction). In the example illustrated in FIG. 15, the second end 42a-2 described above is disposed on the fourth portion 421-4.

When the second post 42-2 is extended, the position of the second end 42a-2 of the second post 42-2 is adjusted in a direction away from the base 64 (in other words, in the second direction DR2). When the second post 42-2 is contracted, the position of the second end 42a-2 of the second post 42-2 is adjusted in a direction toward the base 64 (in other words, in the first direction DR1).

The second post 42-2 may include a second spring 64-2 that biases the fourth portion 421-4 in the second direction DR2 (for example, the upper direction). Alternatively or additionally, the second post 42-2 may include a fluid pressure cylinder (for example, an air cylinder or a hydraulic cylinder) for moving the fourth portion 421-4 in the second direction DR2 (for example, the upper direction).

As in the example illustrated in FIG. 11, the second post 42-2 may include a second fixing component 65-2 that fixes the position of the fourth portion 421-4 relative to the third portion 421-3. In this case, after the height of the fourth portion 421-4 is adjusted, the height of the fourth portion 421-4 can be fixed using the second fixing component 65-2.

In the example illustrated in FIG. 31, the base 64 includes a lower base 641 and an upper base 646. The base 64 includes a plurality of connection posts 647 connecting the lower base 641 and the upper base 646. In the example illustrated in FIG. 31, the lower base 641 is disposed on the first direction DR1 side of the upper base 646.

In the example illustrated in FIG. 31, the lower base 641 supports the backing component 40. In the example illustrated in FIG. 31, the holding components 50 are disposed on the upper base 646. As in the example illustrated in FIG. 31, the base 64 (more specifically, the upper base 646) may support the outer nozzles 62.

In the example illustrated in FIG. 16, the base 64 (more specifically, the lower base 641) is attached to the table 31. In the example illustrated in FIG. 16, the machine tool 1 includes a fixing component F fixing the base 64 (more specifically, the lower base 641) to the table 31. The fixing component F is, for example, a bolt F1.

In the example illustrated in FIG. 11, the workpiece supporter 3 (more specifically, the jig 4) includes the holding components 50 that hold the side walls 71 of the case 7. In the example illustrated in FIG. 11, with the side walls 71 of the case 7 held by the holding components 50, the friction stirring welding can be performed on the end wall 73 of the case 7 and the cover 8.

The holding components 50 prevent the case 7 from being misaligned while the friction stirring is being performed. Furthermore, when the side walls 71 of the case 7 are held by the holding components 50, the friction stirring welding tool T1, which moves relative to the holding components 50 during the friction stir, does not interfere with the holding components 50.

In the example illustrated in FIG. 11, the holding components 50 include the first holding component 51a that holds the first side wall 71-1 of the case 7 and the second holding component 51b that holds the second side wall 71-2 of the case 7.

In the example illustrated in FIG. 11, the backing component 40 is disposed to cross a space SP1 between the first holding component 51a and the second holding component 51b.

In the example illustrated in FIG. 11, the first holding component 51a includes a first movable portion 513a with its position changeable with respect to a first fixed portion 511a (for example, part of the upper base 646). When the first movable portion 513a moves toward the first fixed portion 511a, the first side wall 71-1 of the case 7 is clamped by the first fixed portion 511a and the first movable portion 513a. The first movable portion 513a may be screwed to a first screw component SB1. In this case, when the first screw component SB1 is rotated relative to the first movable portion 513a, the first movable portion 513a moves toward the first fixed portion 511a. Alternatively, the first holding component 51a may include a fluid pressure cylinder (for example, an air cylinder or a hydraulic cylinder) for moving the first movable portion 513a toward the first fixed portion 511a.

In the example illustrated in FIG. 11, the second holding component 51b includes a second movable portion 513b with its position changeable with respect to a second fixed portion 511b (for example, another part of the upper base 646). When the second movable portion 513b moves toward the second fixed portion 511b, the second side wall 71-2 of the case 7 is clamped by the second fixed portion 511b and the second movable portion 513b. The second movable portion 513b may be screwed to a second screw component SB2. In this case, when the second screw component SB2 is rotated relative to the second movable portion 513b, the second movable portion 513b moves toward the second fixed portion 511b. Alternatively, the second holding component 51b may include a fluid pressure cylinder (for example, an air cylinder or a hydraulic cylinder) for moving the second movable portion 513b toward the second fixed portion 511b.

In the example illustrated in FIG. 23, the holding components 50 (for example, the first holding component 51a and the second holding component 51b) are supported by the base 64 (more specifically, the upper base 646).

In the example illustrated in FIGS. 9 and 10, the workpiece supporter 3 (more specifically, the jig 4) includes the fall-prevention components 67 for preventing the cover 8 from falling off the case 7. In the example illustrated in FIGS. 9 and 10, the fall-prevention components 67 include the first fall-prevention component 67-1 and the second fall-prevention component 67-2. The workpiece supporter 3 (more specifically, the jig 4) may include the first actuator 68-1 for moving the first fall-prevention component 67-1 between the first advanced position P1-1 in contact with the cover 8 and the first retracted position P2-1 separated from the cover 8. The workpiece supporter 3 (more specifically, the jig 4) may include the second actuator 68-2 for moving the second fall-prevention component 67-2 between the second advanced position P1-2 in contact with the cover 8 and the second retracted position P2-2 separated from the cover 8.

In the example illustrated in FIGS. 9 and 10, the fall-prevention components 67 (for example, the first fall-prevention component 67-1 and the second fall-prevention component 67-2) are supported by the base 64 (more specifically, the upper base 646).

In the example illustrated in FIG. 12, the at least one nozzle 61 is attached to the jig 4 (more specifically, the backing component 40 of the jig 4). In the example illustrated in FIG. 12, the first nozzle 61a is attached to a side surface 43 of the backing component 40 (more specifically, the side surface 43 of first post 42-1).

In the example illustrated in FIG. 12, the at least one nozzle 61 (for example, the first nozzle 61a) is the spray nozzle SN that disperses the coolant L1 toward the inner surface 7n of the case 7. As in the example illustrated in FIG. 32, the spray nozzle SN (for example, the first nozzle 61a) may be configured to disperse the coolant L1 into a fan shape. Alternatively, the spray nozzle SN (for example, the first nozzle 61a) may be configured to disperse the coolant L1 into a conical shape.

In the example illustrated in FIG. 12, the at least one outer nozzle 62 is attached to the jig 4 (more specifically, the base 64 of the jig 4).

Each of the plurality of outer nozzles 62 may emit the coolant L1 in a fan shape toward the outer surfaces 71t of the side walls 71 to cover a wide area of the side walls 71.

To prevent the coolant L1 from reaching the cover 8, each of the plurality of outer nozzles 62 may emit the coolant L1 obliquely downward. To prevent the coolant L1 from reaching the cover 8, the emission speed of the coolant L1 from each of the plurality of outer nozzles 62 may be slower than the emission speed of the coolant L1 from the first nozzle 61a. If the emission speed of the coolant L1 from the outer nozzles 62 is low, the coolant L1 emitted from the outer nozzles 62 is less likely to be dispersed upward.

The machine tool 1 may be capable of selectively executing a first emission mode (see FIG. 24) under which the coolant L1 is emitted from the first nozzle 61a while emission of the coolant L1 from the outer nozzles 62 is stopped, and a second emission mode (see FIG. 12) under which the coolant L1 is emitted from both the first nozzle 61a and the outer nozzles 62.

### (Wall 11a and Door 11b)

As in the example illustrated in FIGS. 33 and 34 , the machine tool 1 may include a wall 11a surrounding a machining region RG1 where the friction stirring is performed. The wall 11a prevents the coolant L1 from scattering to the outside of the machining region RG1 where the friction stirring is performed.

The wall 11a surrounds the case 7 and the cover 8 supported by the workpiece supporter 3. In the example illustrated in FIGS. 33 and 34 , the wall 11a surrounds the jig 4 supporting the case 7 and the cover 8. The wall 11a also surrounds a lower end portion 15g of the machining head 15. In the example illustrated in FIGS. 33 and 34 , the wall 11a surrounds the table 31.

As in the example illustrated in FIGS. 33 and 34 , an opening OP through which the case 7 and the cover 8 can pass may be formed in the wall 11a. In the example illustrated in FIGS. 33 and 34 , the machine tool 1 includes a door 11b that opens and closes the opening OP formed in the wall 11a. The wall 11a and the door 11b surround the machining region RG1 where the friction stirring is performed and prevent the coolant L1 from scattering to the outside of this machining region RG1.

### (Supplier 12)

In the example illustrated in FIG. 30, the supplier 12 includes a pump 121 for supplying the coolant L1 to the applicator 60 (for example, the at least one nozzle 61). The supplier 12 may include a valve 123 disposed between the applicator 60 (for example, the at least one nozzle 61) and the pump 121.

### (Circulation of Coolant L1)

As in the example illustrated in FIG. 30, the machine tool 1 may include a circulation flow channel 13 for circulating the coolant L1 and a tank 141 for storing the coolant L1.

The circulation flow channel 13 includes a supply flow channel 131 for supplying the coolant L1 to the applicator 60 (for example, the at least one nozzle 61) from the tank 141.

The circulation flow channel 13 includes a return flow channel 138 for returning the coolant L1 inside the machining region RG1 where the friction stirring described above is performed, to the tank 141. With the machining region RG1 surrounded by the wall 11a, the coolant L1 can be smoothly collected.

### (Chiller 143)

The machine tool 1 may include a chiller 143 that reduces the temperature of the coolant L1. In the example illustrated in FIG. 30, the chiller 143 receives the coolant L1 from the tank 141, and reduces the temperature of the coolant L1 received. The coolant L1 with the temperature reduced is returned to the tank 141.

### (Cutting Tool T2)

As in the example illustrated in FIG. 25, the machine tool 1 may be capable of cutting at least one of the case 7 and the cover 8 using the cutting tool T2. More specifically, the spindle 151 may be capable of holding the cutting tool T2.

For example, when the friction stirring welding tool T1 generates burrs from at least one of the case 7 and the cover 8, the burrs may be removed using the cutting tool T2 (for example, the milling tool T2-1).

The cutting tool T2 attached to the spindle 151 may be the drilling tool T2-2. After the friction stirring welding on the case 7 and the cover 8, a hole may be formed in the case 7 and/or the cover 8 using the cutting tool T2 (for example, the drilling tool T2-2). For example, the holes 75h (see FIG. 2) of the attachment portions 75 may be formed using the drilling tool T2-2.

The cutting tool T2 attached to the spindle 151 may be a tap tool. After the friction stirring welding on the case 7 and the cover 8, a screw thread may be formed in a hole (for example, a hole formed in the case 7), using the cutting tool T2 (for example, the tap tool).

After the friction stirring welding on the case 7 and the cover 8, the side walls 71 of the case 7 or the inner surface of the case 7 may be cut using the cutting tool T2.

In the machine tool 1 in embodiment 1, the friction stirring can be performed while the coolant L1 is applied to the case 7. Thus, the warpage of the case 7 due to heat produced by the friction stirring is suppressed. Thus, the machine tool 1 can cut at least one of the case 7 and the cover 8 highly precisely, after the friction stirring welding on the case 7 and the cover 8.

### (Automatic Tool Changer 19)

As in the example illustrated in FIG. 35, the machine tool 1 may include the automatic tool changer 19. With the automatic tool changer 19, the friction stirring welding tool T1 held on the spindle 151 can be replaced with the cutting tool T2 (such as, for example, the milling tool T2-1, the drilling tool T2-2, or a tap tool).

In the example illustrated in FIG. 35, the automatic tool changer 19 has a tool change arm 191, an arm rotator 194 for rotating the tool change arm 191, and an arm mover 196 for linearly moving the tool change arm 191. The arm rotator 194 rotates the tool change arm 191 about a second axis AX2. The arm mover 196 moves the tool change arm 191 in a direction parallel with the second axis AX2.

In the example illustrated in FIG. 35, the tool change arm 191 can grip the friction stirring welding tool T1 and the cutting tool T2 at the same time. In the example illustrated in FIG. 35, the tool change arm 191 includes a first gripping portion 191a for gripping the friction stirring welding tool T1 and a second gripping portion 191b for gripping the cutting tool T2.

Alternatively, the tool change may be manually performed. When the machine tool 1 is a machine only capable of performing friction stir, the tool change is omitted.

### (Controller 2)

As in the example illustrated in FIG. 30, the machine tool 1 may include the controller 2 that controls the rotational driver 16 and the mover 17. Additionally, the controller 2 may control the supplier 12. Alternatively or additionally, the controller 2 may control the automatic tool changer 19. Alternatively or additionally, the controller 2 may control the actuators 68 (more specifically, the first actuator 68-1 and the second actuator 68-2) for moving the fall-prevention components 67.

In the example illustrated in FIG. 36, the controller 2 includes a hardware processor 20 (hereinafter, simply referred to as "processor 20"), a memory 22, a communication circuit 24, an inputter 26, and a display 27. The processor 20, the memory 22, the communication circuit 24, the inputter 26, and the display 27 are connected to each other via a bus 28. In the example illustrated in FIG. 36, the inputter 26 includes a touch panel 26t on the display 27. In other words, the display 27 is a display with the touch panel 26t. The inputter 26 may include buttons, switches, levers, a pointing device, and/or a keyboard.

The memory 22 is a storage medium readable by the processor 20 of the controller 2. The memory 22 may be, for example, a non-volatile or volatile semiconductor memory such as RAM, ROM, and a flash memory, a magnetic disk, or a memory of another form.

The memory 22 stores data DA and a machining program PM. By the processor 20 of the controller 2 executing the machining program PM stored in the memory 22, the controller 2 generates a control instruction. The communication circuit 24 transmits this control instruction to control target devices (more specifically, the rotational driver 16, the mover 17, the supplier 12, the automatic tool changer 19, the actuators 68, and the like). Thus, by the processor 20 executing the machining program PM, the controller 2 can control the control target devices (more specifically, the rotational driver 16, the mover 17, the supplier 12, the automatic tool changer 19, the actuators 68, and the like).

### (Welding Mode M1)

As in the example illustrated in FIG. 22, the controller 2 can execute a welding mode M1. The welding mode M1 is a mode under which friction stirring welding is performed on the case 7 and the cover 8 to form the refrigerant flow channel 91 with the groove 73v of the case 7 and the cover 8.

The welding mode M1 is also a mode under which friction stirring welding is performed on the case 7 and the cover 8 using the friction stirring welding tool T1. More specifically, the welding mode M1 is a mode under which the friction stirring welding tool T1 in a rotation state is moved relative to the case 7 and the cover 8 so that friction stirring welding is performed on the case 7 and the cover 8.

As in the example illustrated in FIG. 30, while the welding mode M1 is being executed, the controller 2 transmits a first rotation instruction R1 to the rotational driver 16. Upon receiving the first rotation instruction R1, the rotational driver 16 rotates the spindle 151, holding the friction stirring welding tool T1, about the first axis AX1.

While the welding mode M1 is being executed, the controller 2 transmits a first movement instruction S1 to the mover 17. Upon receiving the first movement instruction S1, the mover 17 moves the friction stirring welding tool T1 in the rotation state relative to the case 7 and the cover 8 along the first path PA (see FIG. 21) specified by the machining program PM.

The first path PA may include the boundary PA1 between the case 7 and the cover 8. In this case, the case 7 and the cover 8 are butt-joined by friction stirring. More specifically, the first path PA may include a boundary PA1-1 between the step 731 of the case 7 (see FIG. 5) and the outer edge 81 of the cover 8 (see FIG. 5). In this case, the step 731 of the case 7 and the outer edge 81 of the cover 8 are butt-joined by friction stirring.

As can be recognized in FIGS. 1 and 21, the first path PA may include the path PA2 along the region where the case 7 and the cover 8 overlap. In this case, the case 7 and the cover 8 are lap-joined by friction stirring. In the example illustrated in FIG. 21, the first path PA includes the path PA2-1 that passes through the center portion 83 of the cover 8. In this case, the case 7 and the center portion 83 of the cover 8 are lap-joined by friction stirring.

In the example illustrated in FIG. 22, at least one of the plurality of posts 42 is located vertically below the center portion 83 of the cover 8. More specifically, when the case 7 and the center portion 83 of the cover 8 are lap-joined, at least one of the plurality of posts 42 supports the end wall 73 of the case 7 vertically below the friction stirring welding tool T1.

In the example illustrated in FIG. 21, the first path PA includes both the boundary PA1 between the case 7 and the cover 8 and the path PA2-1 passing through the center portion 83 of the cover 8. In this case, the case 7 and the cover 8 are butt-joined by friction stir, and the case 7 and the center portion 83 of the cover 8 are lap-joined by friction stirring.

While the welding mode M1 is being executed, the applicator 60 (for example, the first nozzle 61a and/or the second nozzle 61b) emits the coolant L1 to the case 7 (for example, the inner surface 7n of the case 7). More specifically, the at least one nozzle 61 (for example, the first nozzle 61a and/or the second nozzle 61b) ejects the coolant L1 to the inner surface 73n of the end wall 73 of the case 7.

As in the example illustrated in FIG. 24, while the welding mode M1 is being executed, the at least one nozzle 61 may emit the coolant L1 to substantially the entire inner surface 73n of the end wall 73, excluding the portion of the inner surface 73n of the end wall 73 described above in contact with the backing component 40. As in the example illustrated in FIG. 12, while the welding mode M1 is being executed, the at least one outer nozzle 62 may emit the coolant L1 to the outer surfaces 71t of the side walls 71 of the case 7.

As in the example illustrated in FIG. 30, while the welding mode M1 is being executed, the controller 2 may transmit a supply instruction U1 to the supplier 12. Upon receiving the supply instruction U1, the supplier 12 (for example, the pump 121 and/or the valve 123) supplies the coolant L1 to the applicator 60 (for example, the first nozzle 61a and/or the second nozzle 61b). The applicator 60 (for example, the first nozzle 61a and/or the second nozzle 61b) emits the coolant L1, supplied from the supplier 12, to the case 7.

Alternatively, the supplier 12 (for example, the pump 121 and/or the valve 123) may be manually operated an operator. More specifically, the machine tool 1 may be equipped with a manual switch for operating the supplier 12.

In the example illustrated in FIG. 30, while the welding mode M1 is being executed, the applicator 60 (for example, the first nozzle 61a and/or the second nozzle 61b) emits the coolant L1 into the case 7 but not into the cover 8. When the coolant L1 does not reach the cover 8, the coolant L1 will not enter the gap between the case 7 and the cover 8.

As in the example illustrated in FIG. 17, the welding mode M1 may start with the fall-prevention components 67 being at the advanced position P1 in contact the cover 8. More specifically, with the fall-prevention components 67 positioned at the advanced position P1 in contact with the cover 8, friction stirring on the case 7 and the cover 8 using the friction stirring welding tool T1 may start. In this case, the cover 8 is prevented from falling off the case 7 when the friction stirring starts.

As in the example illustrated in FIGS. 17 and 18, the controller 2 may transmit a first operation instruction to the actuators 68 to move the fall-prevention components 67 from the advanced position P1 described above to the retracted position P2 described above in response to the friction stirring welding tool T1 approaching the fall-prevention components 67. The controller 2 may determine whether the friction stirring welding tool T1 is approaching the fall-prevention components 67 based on the machining program PM. Alternatively, the controller 2 may determine whether the friction stirring welding tool T1 is approaching the fall-prevention components 67 based on a signal from a proximity sensor.

As in the example illustrated in FIGS. 17 and 18, in response to the friction stirring welding tool T1 approaching the first fall-prevention component 67-1, the controller 2 may control the first actuator 68-1 and the second actuator 68-2 to position the first fall-prevention component 67-1 at the first retracted position P2-1 and the second fall-prevention component 67-2 at the second advanced position P1-2.

As in the example illustrated in FIGS. 19 and 20, in response to the friction stirring welding tool T1 approaching the second fall-prevention component 67-2, the controller 2 may control the first actuator 68-1 and the second actuator 68-2 to position the first fall-prevention component 67-1 at the first advanced position P1-1 and the second fall-prevention component 67-2 at the second retracted position P2-2.

In the example illustrated in FIG. 13, the welding mode M1 is executed with the friction stirring welding tool T1 positioned above the backing component 40. If the machine tool 1 is a horizontal machining center, the welding mode M1 may be executed with the height of the friction stirring welding tool T1 being approximately equal to the height of the backing component 40.

### (Cutting Mode M2)

As in the example illustrated in FIGS. 25 and 30, the controller 2 may be capable of selectively executing the welding mode M1 and a cutting mode M2. The cutting mode M2 is a mode under which at least one of the case 7 and the cover 8 is cut using the cutting tool T2. More specifically, the cutting mode M2 is a mode under which the cutting tool T2 in a rotation state is moved relative to the case 7 and the cover 8 to cut at least one of the case 7 and the cover 8.

In the example illustrated in FIGS. 25 and 30, the spindle 151 can selectively hold the friction stirring welding tool T1 and the cutting tool T2. The spindle 151 holds the friction stirring welding tool T1 when the welding mode M1 is executed, whereas the spindle 151 holds the cutting tool T2 when the cutting mode M2 is executed.

As in the example illustrated in FIG. 25, while the cutting mode M2 is being executed, the controller 2 transmits a second rotation instruction R2 to the rotational driver 16. Upon receiving the second rotation instruction R2, the rotational driver 16 rotates the spindle 151, holding the cutting tool T2, about the first axis AX1.

While the cutting mode M2 is being executed, the controller 2 transmits a second movement instruction S2 to the mover 17. Upon receiving the second movement instruction S2, the mover 17 moves the cutting tool T2 in the rotation state relative to the case 7 and the cover 8 along the second path PB specified by the machining program PM.

The second path PB may overlap the first path PA described above. For example, the controller 2 may control the mover 17 to move the cutting tool T2 (for example, the milling tool T2-1) in the rotation state relative to the case 7 and the cover 8 along the second path PB, which overlaps the first path PA described above. In this case, the burrs generated during the friction stirring are removed by the cutting tool T2 (for example, the milling tool T2-1).

The second path PB may include a path parallel to the first direction DR1. For example, the cutting tool T2 (for example, the drilling tool T2-2) in the rotation state may move along the second path PB, to form a hole in the case 7 and/or the cover 8 by the cutting tool T2 (for example, the drilling tool T2-2). Alternatively or additionally, the cutting tool T2 (for example, the tap tool) in the rotation state may move along the second path PB, to form a screw thread in the hole described above (for example, the hole formed in the case 7) by the cutting tool T2 (for example, the tap tool).

While the cutting mode M2 is being executed, a cutting fluid may be applied to the cutting tool T2. Alternatively, the cutting mode M2 may be executed with no cutting fluid applied to the cutting tool T2 (dry cutting).

As in the example illustrated in FIG. 26, the cutting mode M2 may be executed with the fall-prevention components 67 described above positioned at the retracted position P2 separated from the cover 8. More specifically, with the fall-prevention components 67 described above positioned at the retracted position P2 separated from the cover 8, at least one of the case 7 and the cover 8 may be cut using the cutting tool T2.

If the machine tool 1 does not have the function of cutting workpieces using a cutting tool, or if there is no need to cut the case 7 and the cover 8, the cutting mode M2 described above is omitted.

### (Tool Change Mode M3)

In the example illustrated in FIG. 35, the controller 2 can execute a tool change mode M3. The tool change mode M3 is a mode under which the friction stirring welding tool T1 held on the spindle 151 is replaced with the cutting tool T2.

More specifically, after the welding mode M1 described above is executed, the controller 2 transmits a tool change instruction C1 to the automatic tool changer 19 to replace the friction stirring welding tool T1 held on the spindle 151 with the cutting tool T2. Upon receiving the tool change instruction C1, the automatic tool changer 19 replaces the friction stirring welding tool T1 held on the spindle 151 with the cutting tool T2. After the tool change mode M3 is executed, the cutting mode M2 described above is executed.

Alternatively, the tool change may be executed manually. More specifically, the operator may manually execute an operation of removing the friction stirring welding tool T1 from the spindle 151 and an operation of attaching the cutting tool T2 to the spindle 151. In this case, the tool change mode M3 described above is omitted.

The present invention is not limited to the embodiments or modifications described above. It is a matter of course that the embodiments and modifications can be deformed or modified within the scope of the technical idea of the present invention. Various techniques used in the embodiments and modifications are applicable to other embodiments and modifications unless any technical contradiction arises. Furthermore, optional configurations in the embodiments and modifications can be omitted as appropriate.

### Description of the Reference Numerals

1 ... Machine tool, 2 ... Controller, 3 ... Workpiece supporter, 4 ... Jig, 7 ... Case, 7n ... Inner surface of case, 8 ... Cover, 11a... Wall, 11b ... Door, 12 ... Supplier, 13 ... Circulation flow channel, 15 ... Machining head, 15g ... Lower end portion of machining head, 16 ... Rotational driver, 16m ... Motor, 17 ... Mover, 19 ... Automatic tool changer, 20 ... Processor, 22 ... Memory, 24 ... Communication circuit, 26 ... Inputter, 26t ... Touch panel, 27 ... Display, 28 ... Bus, 31 ... Table, 40 ... Backing component, 42 ... Post, 42-1 ... First post, 42-2 ... Second post, 42a-1 ... First end, 42a-2 ... Second end, 43 ... Side surface, 44 ... First supply flow channel, 50 ... Holding component, 51a ... First holding component, 51b ... Second holding component, 60 ... Applicator, 61 ... Nozzle, 61a ... First nozzle, 61b ... Second nozzle, 62 ... Outer nozzle, 64 ... Base, 64-1 ... First spring, 64-2 ... Second spring, 65-1 ... First fixing component, 65-2 ... Second fixing component, 67 ... Fall-prevention component, 67-1 ... First fall-prevention component, 67-2 ... Second fall-prevention component, 68 ... Actuator, 68-1 ... First actuator, 68-2 ... Second actuator, 71 ... Side wall, 71-1 ... First side wall, 71-2 ... Second side wall, 71-3 ... Third side wall, 71-4 ... Fourth side wall, 71n ... Inner surface of side wall, 71t ... Outer surface of side wall, 72 ... Collar, 72-1 ... First flange, 72-2 ... Second flange, 73 ... End wall, 73n ... Inner surface of end wall, 73p ... Projection, 73t ... Outer surface of end wall, 73v ... Groove, 74 ... Recess, 75 ... Attachment portion, 75h ... Hole, 79a ... First port, 79b ... Second port, 81 ... Outer edge of cover, 83 ... Center portion of cover, 89a ... First port, 89b ... Second port, 91 ... Refrigerant flow channel, 121 ... Pump, 123 ... Valve, 131 ... Supply flow channel, 138 ... Return flow channel, 141 ... Tank, 143 ... Chiller, 151 ... Spindle, 153 ... Support, 171 ... Machining head mover, 178 ... Table mover, 178a ... X-axis mover, 178b ... Y-axis mover, 191 ... Tool change arm, 191a ... First gripping portion, 191b ... Second gripping portion, 194 ... Arm rotator, 196 ... Arm mover, 421-1 ... First portion, 421-2 ... Second portion, 421-3 ... Third portion, 421-4 ... Fourth portion, 511a ... First fixed portion, 511b ... Second fixed portion, 513a ... First movable portion, 513b ... Second movable portion, 641 ... Lower base, 646 ... Upper base, 647 ... Connection post, 730 ... Bottom wall, 731 ... Step, 738 ... Dent, AX1 ... First axis, AX2 ... Second axis, C1 ... Tool change instruction, CB ... Lid, DA ... Data, DR1 ... First direction, DR2 ... Second direction, EB ... Structure, F ... Fixing component, F1 ... Bolt, JR ... Joint region, L1 ... Coolant, M1 ... Welding mode, M2 ... Cutting mode, M3 ... Tool change mode, OB ... Cooling target object, OP ... Opening, P1 ... Advanced position, P1-1 ... First advanced position, P1-2 ... Second advanced position, P2 ... Retracted position, P2-1 ... First retracted position, P2-2 ... Second retracted position, PA ... First path, PA1 ... Boundary between case and cover, PA1-1 ... Boundary between step of case and outer edge of cover, PA2 ... Path along region where case and cover overlap, PA2-1 ... Path that passes through center portion of cover, PB ... Second path, PM ... Machining program, R1 ... First rotation instruction, R2 ... Second rotation instruction, RG1 ... Machining region, S1 ... First movement instruction, S2 ... Second movement instruction, SB1 ... First screw component, SB2 ... Second screw component, SN ... Spray nozzle, SP ... Inner space, SP1 ... Space between first holding component and second holding component, T1 ... Friction stirring welding tool, T2 ... Cutting tool, T2-1 ... Milling tool, T2-2 ... Drilling tool, U1 ... Supply instruction

## Claims

1. A method of forming a refrigerant flow channel, the method comprising:
preparing a case and a cover, the case including a recess defined by a side wall and an end wall and a groove formed on an outer surface of the end wall, the cover covering the groove;
joining the case and the cover by friction stirring such that a refrigerant flow channel is formed by the groove and the cover; and
emitting a coolant into the case from an applicator, while the friction stirring is being performed.

2. The method of forming a refrigerant flow channel according to claim 1, wherein while the friction stirring is being performed, the applicator emits the coolant into the case but not into the cover.

3. The method of forming a refrigerant flow channel according to claim 2, wherein the case prevents the coolant from reaching the cover.

4. The method of forming a refrigerant flow channel according to any one of claims 1 to 3, wherein while the friction stirring is being performed, the coolant is applied to an inner surface of the case.

5. The method of forming a refrigerant flow channel according to any one of claims 1 to 4, wherein while the friction stirring is being performed, the coolant is applied to an outer surface of the side wall.

6. The method of forming a refrigerant flow channel according to any one of claims 1 to 5, wherein the joining includes:
butt-joining the case and the cover by the friction stir; and
lap-joining the case and a center portion of the cover by the friction stirring.

7. The method of forming a refrigerant flow channel according to any one of claims 1 to 6, wherein
the end wall is supported by a backing component while the friction stirring is being performed, and
at least one nozzle of the applicator emits the coolant onto substantially an entire inner surface of the end wall, excluding a portion of the inner surface of the end wall in contact with the backing component while the friction stirring is being performed.

8. The method of forming a refrigerant flow channel according to any one of claims 1 to 7 further comprising cutting part of a joint region between the end wall and the cover.

9. A method of manufacturing a structure including a refrigerant flow channel, the method comprising:
preparing a case and a cover, the case including a recess defined by a side wall and an end wall and a groove formed on an outer surface of the end wall, the cover covering the groove;
joining the case and the cover by friction stirring such that a refrigerant flow channel is formed by the groove and the cover;
emitting a coolant into the case from an applicator, while the friction stirring is being performed;
disposing a cooling target object in the recess; and
fixing a lid to the case, to close the recess with the lid.

10. A machine tool comprising:
a workpiece supporter configured to support a case and a cover, the case including a recess defined by a side wall and an end wall and a groove formed on an outer surface of the end wall, the cover covering the groove;
a spindle capable of holding a friction stirring welding tool configured to join the case and the cover by friction stirring such that a refrigerant flow channel is formed by the groove and the cover;
a support configured to support the spindle to be rotatable about a first axis;
a rotational driver configured to rotate the spindle about the first axis;
a mover configured to move the spindle and the support relative to the workpiece supporter;
a supplier configured to supply a coolant to an applicator; and
the applicator configured to emit the coolant into the case, while the friction stirring is being performed.

11. The machine tool according to claim 10, wherein
when the case and the cover are supported by the workpiece supporter, the applicator is disposed to face the case without facing the cover.

12. The machine tool according to claim 10 or 11, wherein the applicator includes at least one nozzle configured to emit the coolant onto an inner surface of the case.

13. The machine tool according to any one of claims 10 to 12, wherein the workpiece supporter includes:
a backing component configured to support the end wall of the case; and
a holding component configured to hold the side wall of the case.

14. The machine tool according to any one of claims 10 to 13 further comprising a wall surrounding a machining region where the friction stirring is performed.

15. The machine tool according to any one of claims 10 to 14 further comprising a controller configured to control the rotational driver and the mover, wherein
the spindle is capable of holding a cutting tool configured to cut at least one of the case and the cover, and
the controller is capable of selectively executing
a welding mode under which friction stirring welding is performed on the case and the cover such that the refrigerant flow channel is formed by the groove and the cover, and
a cutting mode under which at least one of the case and the cover is cut using the cutting tool.
